# EUROPEAN PATENT APPLICATION

(11) **EP 3 815 581 A1**
(43) Date of publication of application: **05.05.2021**
(21) Application number: 19822572.4
(22) Date of filing: 14.06.2019
(51) Int. Cl.: A47F 7/00

(54) **TOBACCO FIXTURE AND DISPLAY BODY**

(30) Priority: 18.06.2018 JP 2018115582; 11.04.2019 JP 2019075597
(71) Applicant: Japan Tobacco Inc., Tokyo 105-6927 (JP)
(72) Inventor: OJIMA, Atsushi, Tokyo 105-8422 (JP)
(74) Representative: Hoffmann Eitle
(86) International application number: PCT/JP2019/023741
(87) International publication number: WO 2019/244801

(57) **Abstract**

A tobacco fixture (100) is provided with: a plurality of accommodating areas in each of which a plurality of tobacco products are accommodated so as to be removable by an operator; a brand designating information acquisition unit which acquires brand designating information designating a brand of the tobacco products; a display body (20) disposed in correspondence to the accommodating areas; and a display control unit (control unit (22)) which controls a display operation for the display body (20). The display control unit performs control to cause the display body (20) to perform a display operation in such a way as to enable identification of the accommodating area, among the plurality of accommodating areas, that corresponds to the brand designating information acquired by the brand designating information acquisition unit.

## Description

### Technical Field

The present invention relates to a tobacco fixture and a display body.

### Background Art

In a shop such as a general convenience store or the like, tobacco products of various brands are displayed by brand in a so-called tobacco fixture. That is, in the tobacco fixture, an accommodating area is set for each brand of tobacco products, and a tobacco product of a corresponding brand is accommodated in each accommodating area. Here, the term "tobacco product" does not mean each individual cigarette for smoking, but means a rectangular-parallelepiped-shaped package that accommodates a plurality of cigarettes and a rectangular-parallelepiped-shaped package that accommodates other tobacco products.

When a purchaser purchases a tobacco product, (1) the purchaser specifies a brand, and a salesperson selects and removes a tobacco product of the brand from the fixture, or (2) the purchaser voluntarily removes a tobacco product of a desirable brand from the fixture, and purchases the product.

PTL 1 describes a tobacco fixture that is configured to turn on a lamp when the remaining number of tobacco products decreases.

### Citation List

### Patent Literature

PTL 1: International Publication No. 03/039301

### Summary of Invention

### Technical Problem

There are many brands of tobacco products. Therefore, for example, when removing a tobacco product from a tobacco fixture and when refilling the tobacco fixture with tobacco products, it is not necessarily easy for an operator such as a salesperson to quickly recognize the accommodating area that corresponds to the tobacco product of each brand.

The present invention has been made to address the above problem and provides a tobacco fixture and a display body that enable an operator to easily and quickly recognize an accommodating area that corresponds to a tobacco product of each brand.

### Solution to Problem

With the present invention, there is provided a tobacco fixture comprising:
a plurality of accommodating areas each of which accommodates a plurality of tobacco products so as to be removable by an operator;
a brand-specifying-information acquiring unit that acquires brand specifying information that specifies a brand of the tobacco products;
a display body that is provided in correspondence with the accommodating areas; and
a display controller that controls display operation of the display body,
wherein the display controller performs control to cause the display body to perform display operation in such a manner as to enable identification of, among the plurality of accommodating areas, an accommodating area that corresponds to the brand specifying information acquired by the brand-specifying-information acquiring unit.

### Advantageous Effects of Invention

With the present invention, it is possible to enable an operator to easily and quickly recognize an accommodating area that corresponds to a tobacco product of each brand.

### Brief Description of Drawings

[Fig. 1] Fig. 1 is a front view of a tobacco fixture according to a first embodiment.
[Fig. 2] Fig. 2(a) is a partial enlarged perspective view of a magazine fixture of the tobacco fixture according to the first embodiment, and Fig. 2(b) is a partial enlarged exploded perspective view of the magazine fixture of the tobacco fixture according to the first embodiment.
[Fig. 3] Fig. 3 is a perspective view of a magazine of the tobacco fixture according to the first embodiment.
[Fig. 4] Fig. 4 is a block diagram of the tobacco fixture according to the first embodiment.
[Fig. 5] Fig. 5 is a partial enlarged front view of the tobacco fixture according to the first embodiment, illustrating a state in normal time.
[Fig. 6] Fig. 6 is a partial enlarged front view of the tobacco fixture according to the first embodiment, illustrating a state in which a removal notification display is performed.
[Fig. 7] Fig. 7 is a schematic side sectional view of the tobacco fixture according to the first embodiment.
[Fig. 8] Fig. 8 is a front view illustrating an example of an incorrect-removal notification display performed on a display body of the tobacco fixture according to the first embodiment.
[Fig. 9] Fig. 9 is a front view illustrating examples of a remaining-number display performed on the display body of the tobacco fixture according to the first embodiment.
[Fig. 10] Fig. 10 is a front view illustrating an example of a refilling notification display performed on the display body of the tobacco fixture according to the first embodiment.
[Fig. 11] Fig. 11 is a front view illustrating other examples of a refilling notification display performed on the display body of the tobacco fixture according to the first embodiment.
[Fig. 12] Fig. 12 is a schematic front view of a tobacco fixture according to a second embodiment.
[Fig. 13] Fig. 13(a) is a schematic side sectional view of a tobacco fixture according to a third embodiment, Fig. 13(b) is a plan view of an electrode unit provided on a shelf of the tobacco fixture according to the third embodiment, and Fig. 13(c) is a bottom view of a magazine of the tobacco fixture according to the third embodiment.
[Fig. 14] Fig. 14(a) and Fig. 14(b) are schematic plan views illustrating an action of a magazine of a tobacco fixture according to a fourth embodiment.
[Fig. 15] Fig. 15(a) is a perspective view of a front end portion of a magazine of a tobacco fixture according to a fifth embodiment, and Fig. 15(b) is side view illustrating the front end portion of the magazine of the tobacco fixture according to the fifth embodiment and a part near the front end portion.
[Fig. 16] Fig. 16(a) is a view illustrating an example of a menu screen of an operation tablet of a tobacco fixture according to a sixth embodiment, Fig. 16(b) is a front view illustrating an example of a candidate-area guide display performed on a front wall of a magazine of the tobacco fixture according to the sixth embodiment, and Fig. 16(c) is a view illustrating an example of a screen of the operation tablet when a candidate-area guide display is being performed.
[Fig. 17] Fig. 17 is a front view illustrating an example of a notification display performed on a tobacco fixture according to a seventh embodiment.
[Fig. 18] Figs. 18(a) and 18(b) are partial enlarged front views of a tobacco fixture according to an eighth embodiment.
[Fig. 19] Fig. 19 is a front view of a tobacco fixture according to a ninth embodiment.
[Fig. 20] Fig. 20(a) is an exploded front view of a display-body group (LED bar) of the tobacco fixture according to the ninth embodiment, Fig. 20(b) is a front view of the display-body group, and Fig. 20(c) is a side sectional view illustrating an attachment structure that attaches the display-body group to a shelf of a magazine accommodation rack.
[Fig. 21] Fig. 21 is a schematic perspective view illustrating an example of a function of a tobacco fixture according to a tenth embodiment.
[Fig. 22] Fig. 22 is a schematic perspective view illustrating another example of a function of the tobacco fixture according to the tenth embodiment.
[Fig. 23] Fig. 23 is a perspective view of one accommodation rack of a tobacco fixture according to an eleventh embodiment.
[Fig. 24] Fig. 24 is a partial enlarged side sectional view of the tobacco fixture according to the eleventh embodiment, illustrating one magazine and a part surrounding the magazine.
[Fig. 25] Fig. 25 is a front view of the tobacco fixture according to the eleventh embodiment.
[Fig. 26] Fig. 26 is a block diagram of the tobacco fixture according to the eleventh embodiment.
[Fig. 27] Fig. 27(a) and Fig. 27(b) are schematic plan views illustrating a positioning mechanism that positions a magazine with respect to a magazine accommodation rack in a tobacco fixture according to a twelfth embodiment.
[Fig. 28] Fig. 28 is a view illustrating an example of an image that is displayed on a display screen of a display device of a tobacco fixture.

### Description of Embodiments

Hereafter, embodiments of the present invention will be described with reference to the drawings. In all drawings, similar constituent elements will be denoted by the same numerals, and descriptions will be omitted as appropriate.

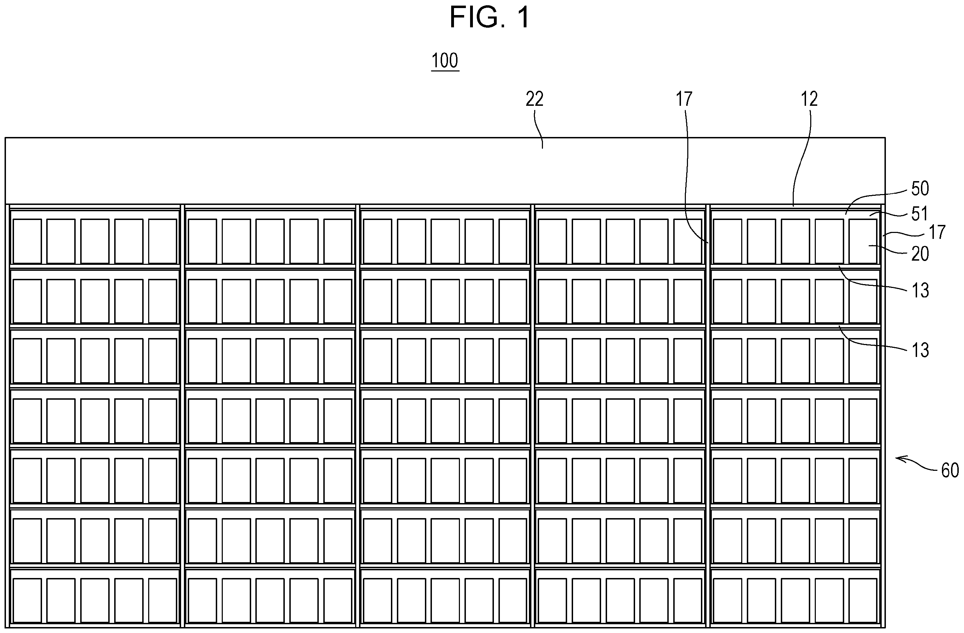

First, referring to Figs. 1 to 11, a first embodiment will be described.

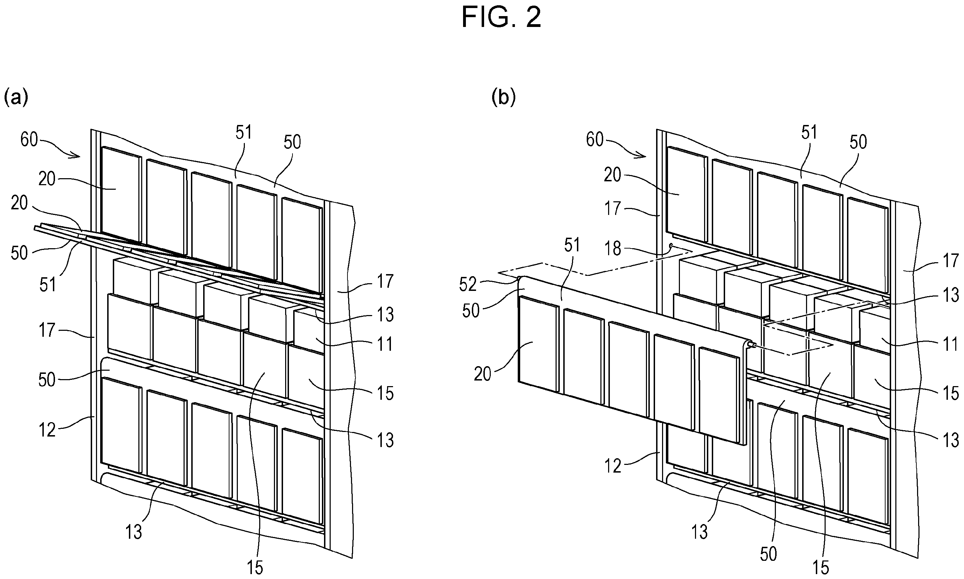

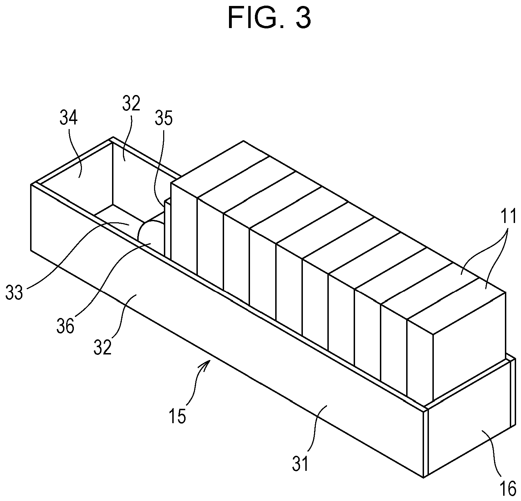

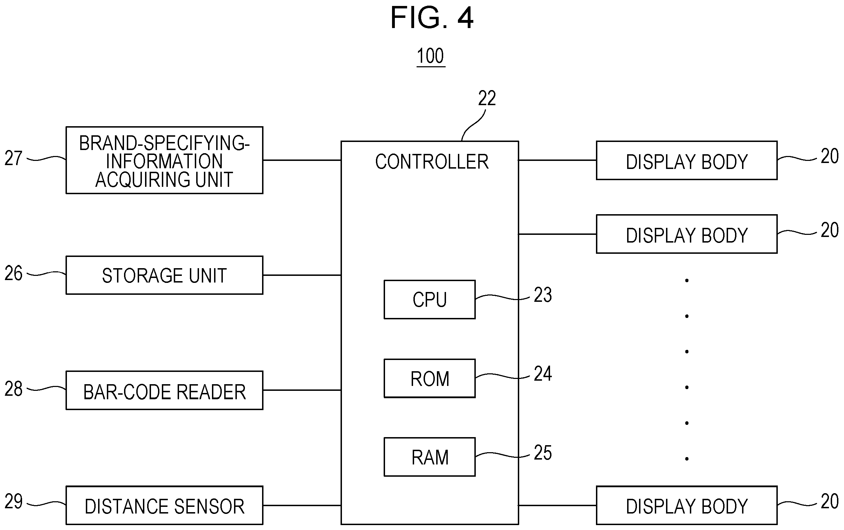

A tobacco fixture 100 according to the present embodiment includes: a plurality of accommodating areas (magazines 15 illustrated in Figs. 2(a), 2(b), and 3 in the present embodiment) each of which accommodates a plurality of tobacco products 11 so as to be removable by an operator; a brand-specifying-information acquiring unit 27 (Fig. 4) that acquires brand specifying information that specifies a brand of the tobacco products 11; a display body 20 that is provided in correspondence with the accommodating areas; and a display controller (a controller 22) that controls display operation of the display body 20. The display controller performs control to cause the display body 20 to perform display operation in such a manner as to enable identification of, among the plurality of accommodating areas, an accommodating area that corresponds to the brand specifying information acquired by the brand-specifying-information acquiring unit 27.

With the present embodiment, because the display controller performs control to cause the display body 20 to perform display operation in such a manner as to enable identification of, among the plurality of accommodating areas (the magazines 15), an accommodating area that corresponds to the brand specifying information acquired by the brand-specifying-information acquiring unit 27, it is possible to enable an operator to easily and quickly recognize the accommodating area that corresponds to the tobacco product 11 of each brand.

Thus, for example, it is possible for the operator to easily and quickly perform removal, refilling, and the like of the tobacco product 11.

Here, the term "tobacco product 11" does not mean each individual cigarette for smoking, but means a rectangular-parallelepiped-shaped package that accommodates a plurality of cigarettes or a rectangular-parallelepiped-shaped package that accommodates other tobacco products other than cigarettes. Examples of the other tobacco products include snuff tobaccos, pipe tobaccos, and related articles such as inhalers that are used for the other tobacco products. To be more specific, examples of the other tobacco products include related articles of electronic cigarettes, which are a type of aerosol inhalers.

The tobacco products 11 are accommodated in the magazines 15 that differ from each other for each brand. The tobacco products 11 of the same brand may be accommodated in a plurality of the magazines 15.

Here, in a shop such as a convenience store, for example, a sales counter on which a plurality of sales terminals (for example, electronic cash registers) are set is provided, a workspace for a salesperson is provided at the back of the sales counter, and further, a fixture setting counter on which the tobacco fixture 100 is set is provided at the back of the workspace.

As illustrated in Fig. 1, in the present embodiment, the tobacco fixture 100 includes a magazine fixture 60.

The magazine fixture 60 includes, for example, a plurality of magazine accommodation racks 12 each of which has a plurality of shelves 13, and a plurality of magazines 15 (Figs. 2(a) and 2(b)) that are mounted on the shelves 13. In the present embodiment, the magazines 15 constitute the accommodating areas.

The magazine accommodation racks 12 each include a pair of left and right side walls 17, and multi-tiered shelves 13 spanning between these side walls 17. The magazine accommodation racks 12 that are adjacent to each other may share a side wall 17 located therebetween, or the magazine accommodation racks 12 that are adjacent may each have a side wall 17.

The number of the magazines 15 mounted on the magazine fixture 60 is not particularly limited. As an example, in the present embodiment, the magazine fixture 60 includes five magazine accommodation racks 12 that are arranged side by side, each magazine accommodation rack 12 has seven-tiered shelves 13, and five magazines 15 are arranged side by side on each shelf 13.

Therefore, in the magazine fixture 60, a plurality of magazines 15 are arranged in a plurality of rows in each of the vertical direction and the horizontal direction.

In the present embodiment, the tobacco fixture 100 includes a plurality of display panels 50 that are arranged along the front surface of the magazine fixture 60. The display panel 50 is disposed in each tier of the magazine accommodation rack 12.

Each display panel 50 is disposed so as to close an opening on the front side of each tier of the magazine accommodation rack 12. Accordingly, each display panel 50 covers the front of five magazines 15 that are mounted on a corresponding shelf 13.

Each display panel 50 includes a flat-plate-shaped panel body 51 and display bodies 20 provided on the front side of the panel body 51.

In the present embodiment, the tobacco fixture 100 includes a plurality of display bodies 20 that are disposed so as to correspond to individual magazines 15. Therefore, five display bodies 20 are arranged side by side on the panel body 51, and each display body 20 is disposed in front of a corresponding magazine 15, that is, on a removal side toward which the tobacco product 11 is removed from the magazine 15.

The controller 22 causes the display body 20 that is disposed on the removal side toward which the tobacco product 11 is removed from the magazine 15 to perform display operation in such a manner as to enable identification of the magazine 15 that corresponds to brand specifying information acquired by the brand-specifying-information acquiring unit 27.

Thus, the tobacco fixture 100 according to the present embodiment includes, as the display body 20, a plurality of removal-side display bodies that are respectively disposed on the removal side toward which the tobacco products 11 are removed from individual ones of the accommodating areas (the magazines 15); and the display controller (the controller 22) causes one of the removal-side display bodies that is disposed on the removal side of an accommodating area that corresponds to the brand specifying information acquired by the brand-specifying-information acquiring unit 27 to perform display operation in such a manner as to enable identification of the accommodating area that corresponds to the brand specifying information.

Therefore, an operator can easily remove the tobacco product 11 from the accommodating area that corresponds to the brand specifying information.

Although the disposition of the controller 22 in the tobacco fixture 100 is not particularly limited, the controller 22 is disposed, for example, on the top surface of the magazine fixture 60.

As illustrated in Figs. 2(a) and 2(b), the display panel 50 is pivotally supported so as to be swingable with respect to the magazine accommodation rack 12. For example, a pair of left and right pivots 52 are provided on upper end portions the panel body 51, and these pivots 52 are pivotally received by pivot holes 18 provided in the side walls 17. The pivots 52 may include springs (not shown) so that the pivots 52 can protrude from and retract into side end surfaces of the panel body 51. By doing so, it is easy to perform an operation of attaching the pivots 52 into the pivot holes 18 of the side walls 17.

In normal time, the display panel 50 is in a state of hanging down horizontally under its own weight. In this state, the display panel 50 covers the front side of the magazine 15.

On the other hand, when an operator lifts a lower part of the display panel 50 forward with one hand, as illustrated in Fig. 2(a), the display panel 50 swings with the pivots 52 as the swing axis, and thus the operator can remove the tobacco product 11 forward from the magazine 15 with the other hand.

In the present embodiment, an example in which the magazine accommodation rack 12 supports (holds) the magazines 15 will be described. However, the present invention is not limited to this example. A plurality of accommodating areas may be formed in the magazine accommodation rack 12. That is, the magazine accommodation rack 12 may include a plurality of accommodating areas.

Thus, in the tobacco fixture 100, the plurality of accommodating areas (the magazines 15) are arranged in an array of a plurality of rows in each of the vertical direction and the horizontal direction; the tobacco fixture 100 includes an accommodation rack (the magazine accommodation rack 12) that holds the plurality of accommodating areas or includes the plurality of accommodating areas, and a plurality of the display bodies 20 that are provided in correspondence with individual ones of the accommodating areas; and each of the display bodies 20 is pivotally supported by the accommodation rack so as to be swingable to a closed state in which the display body 20 covers the front side of a corresponding one of the accommodating areas and to an open state in which removal of the tobacco product 11 forward from the accommodating area is enabled.

In the present embodiment, the display body 20 is a flat plate-shaped display body that includes electronic paper. The display body 20 is disposed on the front side of the panel body 51 and is disposed along the panel body 51. The electronic paper is disposed on the front side of the display body 20.

The front surface of the display body 20 may protrude from the front surface of the panel body 51 or may be disposed flush with the front surface of the panel body 51.

In the present embodiment, the electronic paper of the display body 20 can perform color display.

The display body 20 performs various displays on the electronic paper under the control of the controller 22. The display body 20, for example, receives supply of electric power and receives a control signal from the controller 22 via wiring (not shown) provided in the magazine accommodation rack 12 through the pivots 52 of the display panel 50. However, a control signal may be input from the controller 22 to the display body 20 via wireless communication, and the operation of the display body 20 may be controlled via wireless communication. The display body 20 may have a battery (for example, a rechargeable secondary battery).

When the brand-specifying-information acquiring unit 27 acquires brand specifying information, the controller 22 causes the display body 20 corresponding to the magazine 15 corresponding to the brand specifying information to perform display operation.

That is, the tobacco fixture 100 includes a plurality of the display bodies 20 that are provided in correspondence with individual ones of the accommodating areas (the magazines 15), and the display controller (the controller 22) performs control to cause one of the display bodies 20 that corresponds to, among the plurality of accommodating areas, an accommodating area that corresponds to the brand specifying information to perform display operation.

As illustrated in Fig. 3, the magazine 15 includes a mount portion 31 on which the plurality of tobacco products 11 are mounted in an aligned state in which the tobacco products 11 are arranged in the front-back direction, a slider 35 that is movable in the front-back direction along the mount portion 31, and an urging portion 36 that urges the slider 35 forward.

The mount portion 31 includes, for example, a front wall 16, a pair of left and right side walls 32, a bottom plate portion 33, and a back wall 34. The front wall 16 may be fixed to front end portions of the side walls 32 and the bottom plate portion 33, or may be held by front end portions of the pair of side walls 32 in a state in which the front wall 16 can incline forward. The slider 35 urges the tobacco products 11, which are mounted on the mount portion 31, forward. As the remaining number of the tobacco products 11 on the mount portion 31 decreases, the slider 35 moves forward.

The urging portion 36 is mounted on the slider 35. The urging portion 36 may be, for example, a spirally wound plate spring or may be a wire reel.

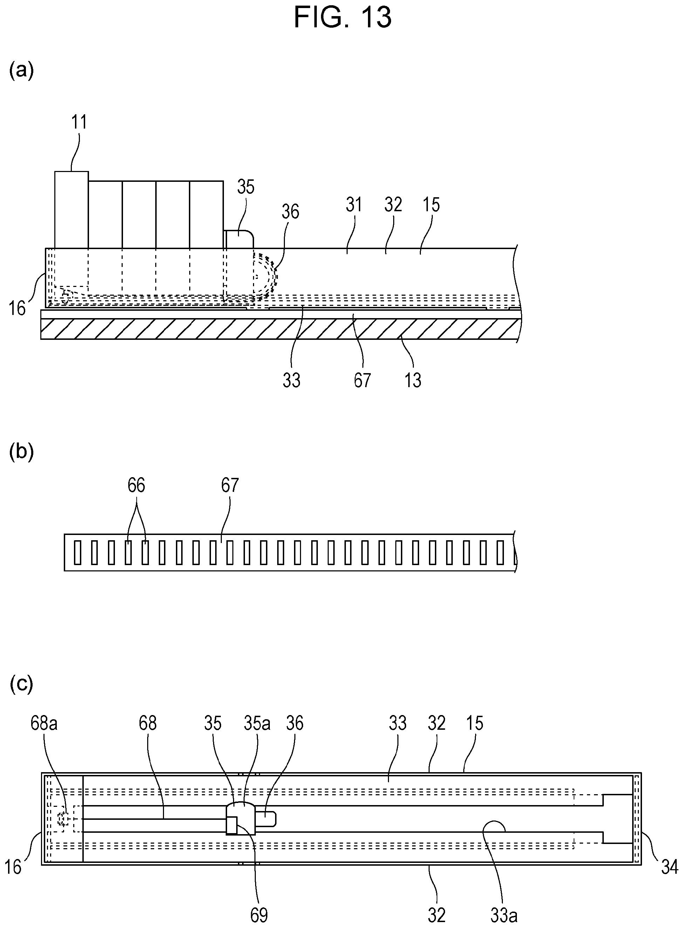

Fig. 13(c), which is a view of another embodiment described below, illustrates an example in which the urging portion 36 is a wire reel. The wire reel includes a case mounted on the slider 35, a plate spring that is spirally wound and accommodated in the case, a wire 68 accommodated in the case so that the wire 68 can be drawn into and drawn out of the case, and a reel around which the wire 68 is wound. A leading end 68a of the wire 68 is fixed to a front end portion of the mount portion 31. When the wire 68 is wound around the reel by being urged by the plate spring, the wire 68 is drawn into the case, and the slider 35 moves forward. Conversely, when the slider 35 is moved backward, the wire 68 is drawn out from the case against an urging force generated by the plate spring.

As illustrated in Fig. 4, the tobacco fixture 100 includes, for example, a storage unit 26 that is non-volatile memory, a bar-code reader 28, and a distance sensor 29 described below, in addition to the plurality of display bodies 20, the controller 22, and the brand-specifying-information acquiring unit 27.

The controller 22 includes a ROM 24 that stores a control program, a CPU 23 that performs a control operation in accordance with the control program, and a RAM 25 that functions as a work area of the CPU 23 and the like.

The controller 22 performs control of the operation of the display body 20, reading-out of information stored in the storage unit 26, writing of (processing for storing) information in the storage unit 26, and the like.

To the controller 22, brand specifying information acquired by the brand-specifying-information acquiring unit 27 and the like are input, and bar-code information read by the bar-code reader 28 and a result of detection by the distance sensor 29 are input. The bar code is article identification information such as JAN (Japanese Article Number).

The brand-specifying-information acquiring unit 27 is, for example, an operation tablet that is operated by a salesperson (operator) of a shop in which the tobacco fixture 100 is set. For example, a salesperson can specify a brand to be removed from the tobacco fixture 100 by inputting a removal request to a touch-panel operation screen of the operation tablet by selecting removal of a tobacco product and by further performing a selection operation of selecting from a brand list that is displayed. Alternatively, a salesperson may be enabled to specify a brand by performing voice input of a brand name to a microphone of the operation tablet.

Thus, an operator is a salesperson of a shop, and the brand-specifying-information acquiring unit 27 acquires brand specifying information that is input by the salesperson (for example, input by performing a selection operation or voice input).

Moreover, the operator inputs (inputs by a selection operation or by voice input), for example, to the brand-specifying-information acquiring unit 27 the number of tobacco products 11 that a purchaser wants to purchase.

In the storage unit 26, information indicating in which magazine 15, among the plurality of magazines 15, the tobacco product 11 of each brand is accommodated is stored (registered).

To be more specific, in the storage unit 26, for example, brand information such as the brand name, the tar value, the nicotine value, the price, and the like of each brand of the tobacco product 11 are stored; and in correspondence with the brand information, magazine position information indicating in which magazine 15 the tobacco product 11 is accommodated is stored.

For example, when refilling the magazine 15 with tobacco products 11, a salesperson performs processing for causing the bar-code reader 28 to read a bar code attached to the tobacco products 11 or the carton of the tobacco products 11, and then the controller 22 performs processing for causing, for example, a yellow display to be performed on a display body 20 that is disposed on the front side of a corresponding magazine 15.

If a plurality of brands of tobacco products 11 are to be refilled simultaneously, for example, after an operator has continuously (successively) performed processing for causing the bar-code reader 28 to read the bar codes of the brands, every time refilling of a magazine 15 with tobacco products 11 is complete, for example, processing for successively (for example, in the order in which reading of the bar code is performed) causing a yellow display to be performed on a display body 20 that is disposed on the front side of a magazine 15 corresponding to the next brand may be performed.

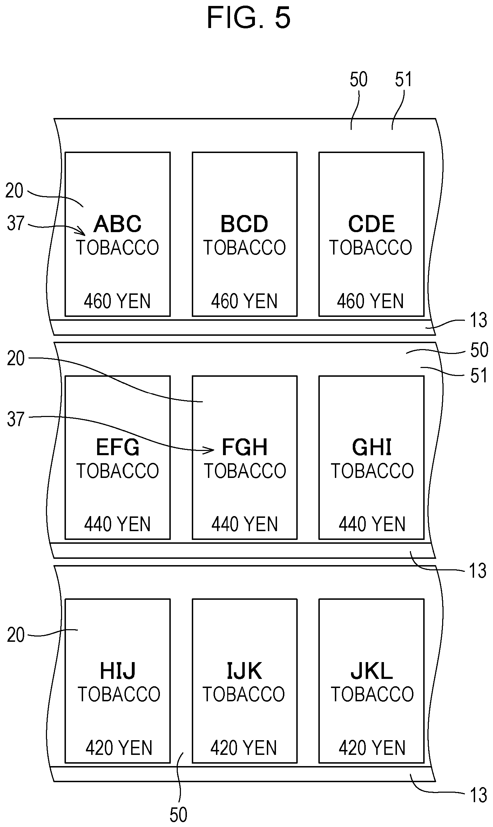

Fig. 5 illustrates an example of a display (a normal display 37) that is performed on each display body 20 in normal time when a removal request for removing a tobacco product or the like is not occurring.

As illustrated in Fig. 5, the brand name, the price, and the like, for example, of the tobacco product 11 accommodated in each magazine 15 are displayed as the normal display 37 on a display body 20 corresponding to each magazine 15. Information displayed as the normal display 37 may include the tar value, the nicotine value, and the like of each tobacco product 11, in addition to the brand name and the price. Moreover, the normal display 37 may include an image of the tobacco product 11.

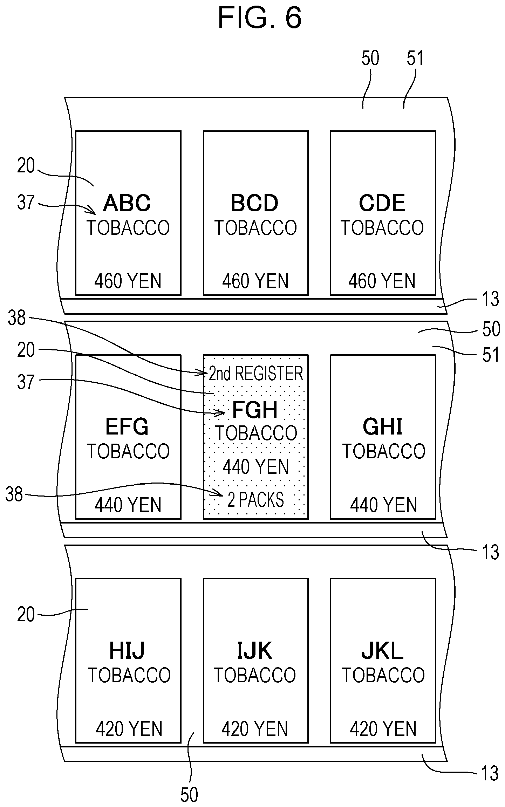

Fig. 6 illustrates an example of a display (a removal notification display 38) performed on a display body 20 corresponding to the magazine 15 in which the tobacco product 11 corresponding to the removal request is accommodated, in a state in which a removal request for removing the tobacco product is occurring.

The removal notification display 38 is a display that is more noticeable than the normal display 37. Forexample, in a case where the entire surface of display paper of the display body 20 (excluding the normal display 37) is a display in an unnoticeable color such as black in a state in which the normal display 37 is performed, the entire surface of the display paper of the display body 20 (excluding a display of character information and an image) becomes a display in a noticeable color such as yellow in a state in which the removal notification display 38 is performed.

Accordingly, the display body 20 on which the removal notification display 38 is performed becomes noticeable compared with the other display bodies 20.

That is, the display controller (the controller 22) performs control to cause the display body 20 corresponding to the accommodating area (the magazine 15) that corresponds to the brand specifying information to be noticeable compared with the other display bodies 20.

Thus, an operator can easily and quickly recognize the position of the accommodating area (the magazine 15) from which the tobacco product 11 is to be removed, and therefore the operator can quickly remove the tobacco product 11 from the accommodating area.

Thus, the brand-specifying-information acquiring unit 27 acquires (via input by a salesperson in the present embodiment) a removal request for removing a tobacco product and brand specifying information corresponding to the removal request, and the display controller (the controller 22) causes the display body 20 to perform the removal notification display 38 that prompts removal of the tobacco product 11 from the accommodating area (the magazine 15).

An operator can remove the tobacco product 11 from the magazine 15 by lifting, with one hand, a lower part of the display panel 50 of the display body 20 on which the removal notification display 38 is performed to open the display panel 50 as illustrated in Fig. 2(a), and in this state, by removing the tobacco product 11 from the magazine 15 corresponding to the display body 20 with the other hand.

When performing the removal notification display 38, a removal notification by voice may be performed from a speaker (not shown). For example, a voice notification such as "Remove tobacco product 11 from place displayed in yellow." may be performed.

In the present embodiment, the removal notification display 38 provides not only a notification of the position of the magazine 15 from which the tobacco products 11 are to be removed but also a display notification of the number of the tobacco products 11 to be removed from the magazine 15 (display of number-specifying information).

That is, the display controller (the controller 22) causes the display body 20 to display number-specifying information indicating the number of the tobacco products 11 that correspond to the removal request and that are to be removed from the accommodating area (the magazine 15).

For example, as illustrated in Fig. 6, a display notification of "2 packs", for example, is performed as the removal notification display 38 performed on the display body 20.

Here, in a shop such as a convenience store, typically, a plurality of sales terminals (for example, electronic cash registers) are set on a sales counter, and a plurality of salespersons can perform sales processing in parallel. For different sales terminals, different salespersons are in charge of sales processing. The brand-specifying-information acquiring unit 27 is provided in correspondence with each sales terminal.

In such a case, preferably, the removal notification display 38 provides not only a notification of the position of the magazine 15 from which the tobacco products 11 are to be removed and the number of the tobacco products 11 but also a display notification of information indicating which sales terminal, among the plurality of sales terminals, is to be used to sell the tobacco products 11 corresponding to the removal request (hereafter, sales-terminal specifying information).

That is, for example, as illustrated in Fig. 6, preferably, a display notification of "2nd Register" is also performed as the removal notification display 38.

In this case, a salesperson in charge of the second register, among the plurality of sales terminals, can easily recognize that an operation of removing the tobacco products 11 from the magazine 15 where the removal notification display 38 is performed is an operation that the salesperson is in charge, and can remove the tobacco product 11 from the magazine 15.

Thus, the display controller (the controller 22) causes, for example, the display body 20 to display sales-terminal specifying information indicating which sales terminal, among the plurality of sales terminals that are set in the shop, is to be used to sell the tobacco product 11 corresponding to the removal request.

In order to make it easier to understand which sales terminal is to be used to sell the tobacco product 11 corresponding to the removal request, it is also preferable that the color of the display body 20 that performs the removal notification display 38 be differentiated for each sales terminal. Moreover, it is also preferable that a sound that is output from a speaker (not shown) when displaying the removal notification display 38 be differentiated for each sales terminal.

Thus, in normal time, the display controller (the controller 22) causes the display bodies 20 corresponding to the accommodating areas to perform the normal display 37 that corresponds to the tobacco products 11 accommodated in the accommodating areas (the magazines 15). When the brand-specifying-information acquiring unit 27 acquires brand specifying information, the display controller causes a specific notification display (for example, the removal notification display 38) in a manner different from the normal display 37 to be performed on one of the display bodies 20 that corresponds to an accommodating area that corresponds to the brand specifying information.

To be more specific, the display controller (the controller 22) causes, when the brand-specifying-information acquiring unit 27 acquires brand specifying information, both of the normal display 37 and the specific notification displays (the removal notification display 38) to be performed in parallel on the display body 20 corresponding to the brand specifying information.

Thus, an operator can remove the tobacco product 11 from the accommodating area indicated by the removal notification display 38, while checking the contents of the normal display 37.

In the present invention, a specific notification display is not limited to the removal notification display 38 and may be a refilling notification display that prompts refilling of the magazine 15 with the tobacco products 11 as described below.

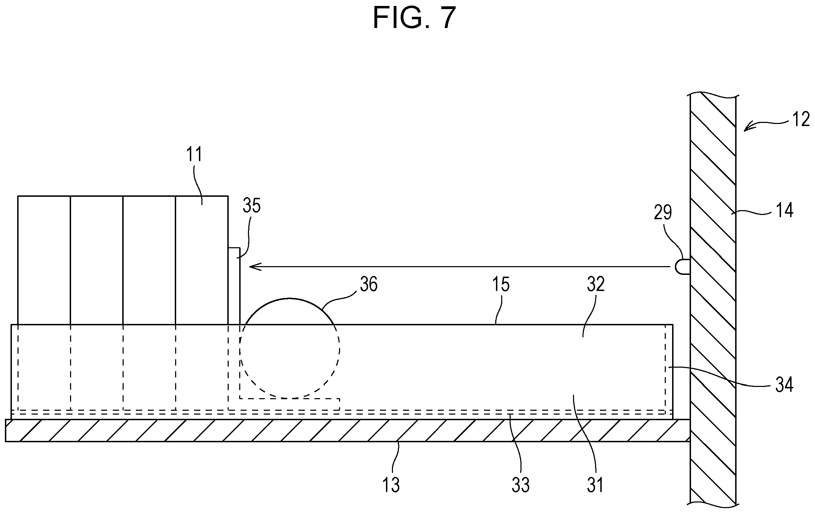

As illustrated in Fig. 7, in the present embodiment, the distance sensor 29 is provided for each magazine 15 on the front side of a back wall 14 of the magazine accommodation rack 12 of the magazine fixture 60.

The distance sensor 29 is, for example, an optical sensor and includes a light emitter that emits light forward and a light receiver that receives reflection light of the light emitted from the light emitter. The measuring method of the distance sensor 29 may be a trigonometric distance-measuring method or a method that converts the time difference between emission of light and reception of light into a distance. The distance sensor 29 is not limited to an optical sensor and may be an ultrasonic sensor.

The distance sensor 29 detects the distance between the distance sensor 29 and the slider 35 or the distance between the distance sensor 29 and the tobacco product 11 at the tail end. That is, the distance sensor 29 detects, from behind, the position of a portion (the tobacco product 11 at the tail end or the slider 35) that moves forward as the number of the tobacco products 11 accommodated in the magazine 15 decreases.

In the present embodiment, a result of detection by the distance sensor 29 that is provided in correspondence with each magazine 15 is input to the controller 22. Based on the result of detection by each distance sensor 29, the controller 22 monitors whether or not the tobacco product 11 has been removed from each magazine 15.

Based on the detection result input from each distance sensor 29, the controller 22 determines whether or not removal of the tobacco product 11 from the magazine 15 performed by an operator is removal of the tobacco product 11 corresponding to a removal request. In other words, the controller 22 and the distance sensor 29 can detect normal removal, which is removal of the tobacco product 11 from the magazine 15 corresponding to the removal request, or incorrect removal, which is removal of the tobacco product 11 from the magazine 15 that differs from the removal request.

When the distance sensor 29 and the controller 22 detect normal removal, the controller 22 performs processing for, for example, finishing the removal notification display 38.

Preferably, the controller 22 is configured to cause the storage unit 26 to store a sales record for each brand every time normal removal is detected.

Moreover, when normal removal is detected in a case where a brand in a state of waiting for a removal notification display exists, it is easy to quickly proceed to a state in which a removal notification display (the removal notification display 38) for the next brand is to be performed.

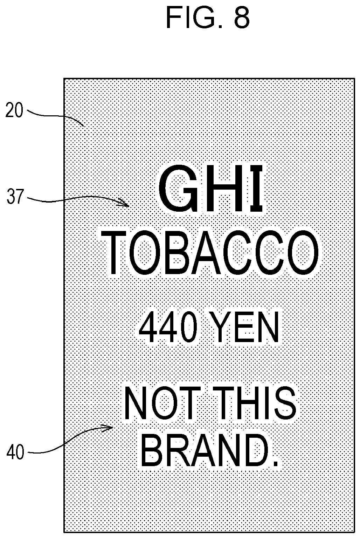

When the distance sensor 29 and the controller 22 detect incorrect removal, the controller 22 causes the display body 20 corresponding to the magazine 15 at which incorrect removal has been performed to display an incorrect-removal notification display 40 (Fig. 8) indicating that the removal is incorrect. The incorrect-removal notification display 40 is, for example, a display such as "Not this brand."

Preferably, the incorrect-removal notification display 40 is also a noticeable display. For example, the electronic paper of the display body 20 that performs the incorrect-removal notification display 40 is switched, for example, from a display state in normal time that is black as a whole to a display state that is red as a whole.

Thus, the tobacco fixture 100 includes an incorrect-removal detector (which includes, for example, the distance sensor 29 and the controller 22) that detects incorrect removal that is removal of the tobacco product 11 from the accommodating area (the magazine 15) that differs from the removal request, and, when incorrect removal occurs, the display controller (the controller 22) causes the display body 20 to perform the incorrect-removal notification display 40 indicating that the removal is incorrect.

Thus, when an operator performs incorrect removal, the operator can quickly recognize that the removal is incorrect, and can remove the tobacco product 11 from the correct accommodating area.

As illustrated in Fig. 8, the normal display 37 may be also performed when the incorrect-removal notification display 40 is performed.

To be more specific, in the present embodiment, each of the plurality of accommodating areas is the magazine 15; and the magazine 15 includes the mount portion 31 on which the plurality of tobacco products 11 are mounted in an aligned state in which the tobacco products 11 are arranged in the front-back direction, the slider 35 that is movable in the front-back direction along the mount portion 31, and the urging portion 36 that urges the slider 35 forward. The incorrect-removal detector includes the distance sensor 29 that is provided behind the slider 35 and that detects the distance between the distance sensor 29 and the slider 35 or the distance between the distance sensor 29 and one of the tobacco products 11 at the tail end.

When providing a notification of incorrect removal, a notification by voice may be performed from a speaker (not shown).

In the present embodiment, the controller 22 manages the remaining number of the tobacco products 11 in each magazine 15 based on a result of detection by each distance sensor 29.

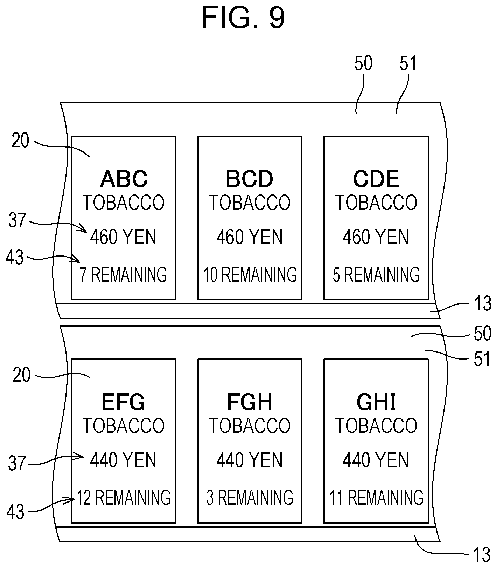

Then, for example, as illustrated in Fig. 9, a remaining-number display 43, which is a display indicating the remaining number of the tobacco products 11 in each magazine 15, is performed on the display body 20 corresponding to each magazine 15 at all times or upon request by a salesperson. That is, in accordance with the result of management by the remaining number, the controller 22 causes the display body 20 corresponding to each magazine 15 to perform the remaining-number display 43, which is a display indicating the remaining number of the tobacco products 11 in each magazine 15.

Thus, a salesperson can easily recognize the remaining number of the tobacco products 11 in each magazine 15.

Here, the thickness of the tobacco product 11 in the front-back direction (hereafter, simply referred to as the "thickness") in a state in which the tobacco product 11 is accommodated in the magazine 15 differs in accordance with the brand of the tobacco product 11.

In the storage unit 26, information indicating the brand of the tobacco product 11 accommodated in each magazine 15 and information indicating the thickness of the tobacco product 11 are stored.

Based on the thickness for each brand and the result of detection by the distance sensor 29, the controller 22 calculates the remaining number of the tobacco products 11 in each magazine 15.

In a case where the tobacco products 11 of the same brand are accommodated in a plurality of magazines 15, the display of the remaining number may be performed on the display body 20 corresponding to one of the magazines 15 among the magazines 15 that accommodate the tobacco products 11 of the brand.

Moreover, the controller 22 may cause the storage unit 26 to store a sales record for each brand based on the result of detection by the distance sensor 29.

The controller 22 may monitor whether the number of the tobacco products 11 removed from the tobacco fixture 100 is excessive or deficient based on the result of detection by the distance sensor 29. In this case, if the number of the tobacco products 11 removed from the tobacco fixture 100 is greater than or less than the number to be sold, under the control of the controller 22, an alert may be raised via a display notification performed by the display body 20 or a voice notification.

In the present invention, the tobacco fixture 100 is not limited to a configuration that automatically detects normal removal and incorrect removal. For example, the tobacco fixture 100 may be configured so that, every time a salesperson removes the tobacco product 11 from the tobacco fixture 100, by operating a removal finish button (not shown) that is provided in correspondence with each magazine 15, the controller 22 finishes the removal notification display 38 and causes the storage unit 26 to store a sales record for each brand.

Moreover, in the present embodiment, the tobacco fixture 100 has a function of performing a refilling notification display that prompts refilling of the magazine 15 with the tobacco products 11.

In the storage unit 26, a remaining number at which refilling of the magazine 15 becomes necessary (refilling threshold) is set for each brand of the tobacco product 11. When the number of the tobacco products 11 of a certain brand in the magazine 15 becomes less than or equal to the refilling threshold, the controller 22 causes the display body 20 corresponding to the magazine 15 to perform a refilling notification display that prompts refilling of the magazine 15 with the tobacco products 11.

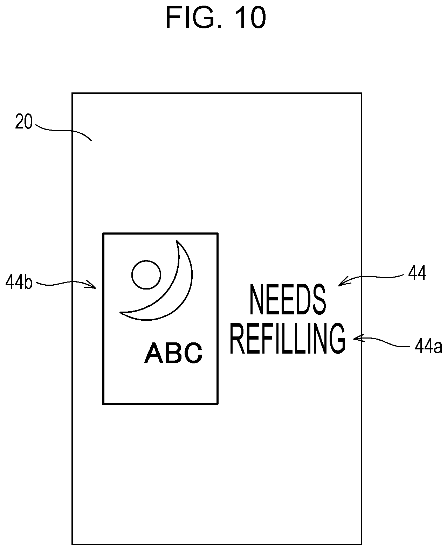

For example, in a case where the brand of the tobacco products 11 that needs refilling is "ABC tobacco", as illustrated in Fig. 10, a display including character information 44a of "Needs refilling" and image information 44b of the image of the ABC tobacco is performed as a refilling notification display 44. Therefore, a salesperson can easily and surely recognize the tobacco product 11 that needs refilling, and can refill a corresponding magazine 15 with the tobacco product 11.

Thus, the tobacco fixture 100 includes a remaining-number managing unit (the controller 22, the distance sensor 29) that manages the remaining number of the tobacco products 11 in each of the plurality of accommodating areas (the magazines 15); and the display controller (the controller 22) causes the display body 20 to perform the refilling notification display 44 that prompts refilling of the accommodating area with the tobacco products 11, in accordance with the result of management by the remaining-number managing unit.

The remaining-number managing unit includes the distance sensor 29 that is provided behind the slider 35 and that detects the distance between the distance sensor 29 and the slider 35 or the distance between the distance sensor 29 and the tobacco product 11 at the tail end.

If a removal request occurs while the refilling notification display 44 is being performed, for example, the refilling notification display 44 may be temporarily stopped and the removal notification display 38 may be preferentially performed as interrupt processing. In this case, for example, the refilling notification display 44 is restarted after the normal removal is detected.

However, the present invention in not limited to this example. The tobacco fixture 100 may be capable of performing the removal notification display 38 and the refilling notification display 44 on one display body 20 in parallel and in display manners that differ from each other.

When it is necessary to refill the tobacco products 11 of a plurality of brands, preferably, the refilling notification display 44 includes, for example, information indicating the order of priority.

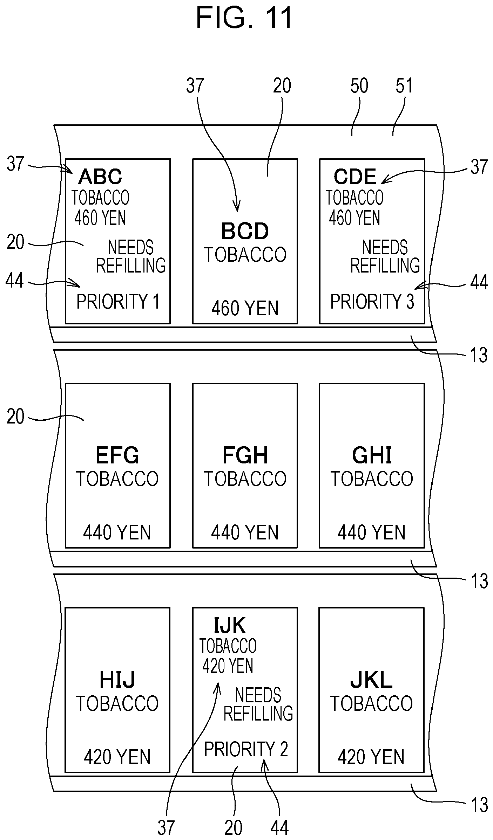

Examples of information indicating the order of priority include, as illustrated in Fig. 11, a display of character information such as "Priority 1", "Priority 2", and "Priority 3", in descending order of refilling priority.

However, the order of priority may be indicated by using the display color of the display body 20, instead of the character information or in addition to the character information.

The order of refilling priority can determined by the controller 22 based on sales records (trend information indicating the trend of units sold) and the stock level.

With the first embodiment described above, the display controller (the controller 22) performs control to cause the display body 20 to perform display operation in such a manner as to enable identification of, among the plurality of accommodating areas (the magazines 15), an accommodating area that corresponds to the brand specifying information acquired by the brand-specifying-information acquiring unit 27.

Thus, it is possible to enable an operator to easily and quickly recognize the accommodating area that corresponds to the tobacco product 11 of each brand. Thus, a workload on the operator (typically, a salesperson) can be reduced.

In the example described in the first embodiment, when incorrect removal is detected, occurrence of incorrect removal is notified by using a display on the display body 20 or voice output from a speaker (not shown). However, the present invention is not limited to this example. For example, occurrence of incorrect removal may be notified to an operator by causing a vibrator (not shown) to vibrate, giving off smell, or mechanically sticking out a member.

### [Second Embodiment]

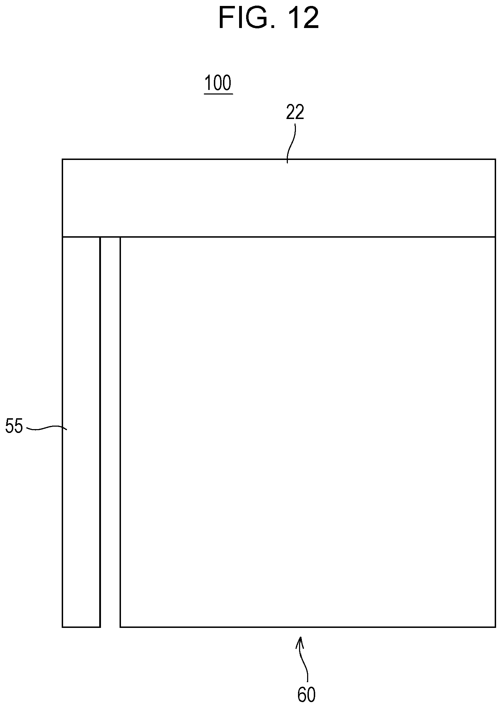

Next, referring to Fig. 12, a second embodiment will be described.

A tobacco fixture 100 according to the present embodiment differs from the tobacco fixture 100 according to the first embodiment in the following respects, and is similar to the tobacco fixture 100 according to the first embodiment in the other respects.

In the present embodiment, as illustrated in Fig. 12, the controller 22 protrudes forward from the magazine fixture 60. The tobacco fixture 100 according to the present embodiment includes a coupling panel 55 that extends downward from a part of the controller 22 that protrudes forward from the magazine fixture 60.

The coupling panel 55 is disposed along the front surface of the magazine fixture 60. The coupling panel 55 includes a plurality of display bodies 20 (not shown in Fig. 12).

To be more specific, the coupling panel 55 includes, for example, a holding frame that extends downward from a part of the controller 22 that protrudes forward from the magazine fixture 60, and a plurality of display panels 50 (not shown in Fig. 12) that are pivotally supported so as to be swingable with respect to the holding frame. The holding frame of the coupling panel 55 may be fixed to the front surface of the magazine fixture 60.

As in the first embodiment, each display body 20 of the display panel 50 is disposed in front of a corresponding magazine 15. As in the first embodiment, by opening the display panel 50, it is possible to remove the tobacco product 11 from the magazine 15 at the back of the display panel 50.

### [Third Embodiment]

Next, referring to Figs. 13(a) to 13(c), a third embodiment will be described.

In the present embodiment, the tobacco fixture 100 includes, instead of the distance sensor 29 described above, a slider-position detector that detects the position of the slider 35 in the front-back direction.

The slider-position detector constitutes, for example, together with the controller 22, an incorrect-removal detector that detects incorrect removal, which is removal of the tobacco product 11 from the magazine 15 that differs from a removal request.

The slider-position detector constitutes, for example, together with the controller 22, a remaining-number managing unit that manages the remaining number of the tobacco products 11 in each of the plurality of magazines 15.

As illustrated in Fig. 13(a), the slider-position detector includes, for example, an electrode unit 67 disposed on the shelf 13 and an electrode 69 provided on a lower part 35a of the slider 35 (Fig. 13(c): described below).

As illustrated in Fig. 13(b), the electrode unit 67 is a member that is elongated in the front-back direction and includes a plurality of electrodes 66 that are arranged at a predetermined interval in the front-back direction.

Here, a slit 33a, which extends in the front-back direction, is formed in a middle part of the bottom plate portion 33 of the magazine 15 in the width direction. Both side parts of the bottom plate portion 33, between which the slit 33a is formed, are guide portions that guide the slider 35 in the front-back direction.

The slider 35 holds the both side parts of the bottom plate portion 33, between which the slit 33a is formed, respectively from above and below. The lower part 35a of the slider 35 is disposed below the lower surface of the bottom plate portion 33.

Here, appropriate wires are connected to each electrode 66 and the electrode 69, and the electrode 69 and the electrode 66 constitute a capacitor. When the position of the slider 35 changes in the front-back direction, an electrode 66 adjacent to the electrode 69 changes, and thus an electrode 66 that constitutes a capacitor together with the electrode 69 successively change. The controller 22 includes a determination circuit that determines the capacitance of each electrode 66, and detects the position of the slider 35 in the front-back direction based on the result of determination by the determination circuit.

In the present embodiment, the controller 22 calculates the remaining number of the tobacco products 11 in each magazine 15 based on the thickness for each brand and the result of detection by the slider-position detector.

Thus, the slider-position detector includes a plurality of position detectors (for example, the electrodes 66) that are arranged at a predetermined interval in the front-back direction and each of which is used to detect the position of the slider 35. The slider-position detector includes a first electrode (the electrode 69) that is provided on the slider 35, each of the plurality of position detectors is a second electrode (the electrode 66), and the slider-position detector further includes a determination circuit that determines the capacitance of each second electrode and detects the position of the slider 35 in the front-back direction based on the result of determination by the determination circuit.

The present invention is not limited to this example. The electrode 69 may be configured to become electrically connected selectively to either one of the electrodes 66 in accordance with the position of the slider 35 in the front-back direction. In this case, the controller 22 detects the position of the slider 35 in the front-back direction in accordance with which electrode 66 has become electrically connected to the electrode 69.

In the present embodiment, the controller 22 may cause the storage unit 26 to store a sales record for each brand based on the result of detection by the slider-position detector.

The controller 22 may monitor whether the number of the tobacco products 11 removed from the tobacco fixture 100 is excessive or deficient based on the result of detection by the slider-position detector.

### [Fourth Embodiment]

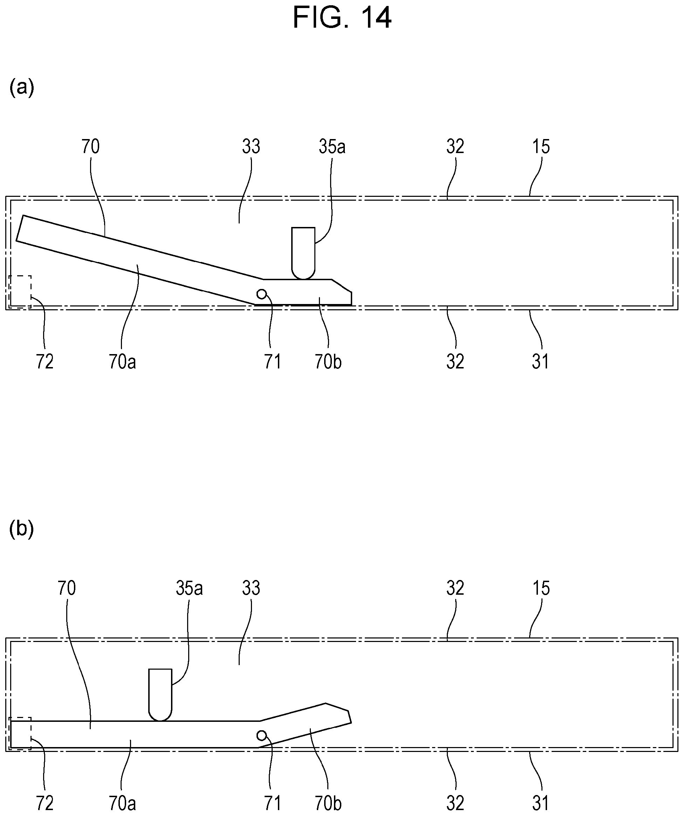

Next, referring to Figs. 14(a) and 14(b), a fourth embodiment will be described.

As illustrated in Figs. 14(a) and 14(b), in the present embodiment, the magazines 15 includes a swing member 70 that is provided on the mount portion 31 so as to be swingable with respect to the mount portion 31. The swing member 70 includes, for example, a front part 70a and a back part 70b each of which extends linearly. The swing member 70 has a bent shape that is bent at the boundary between the front part 70a and the back part 70b.

The swing member 70 is disposed on the lower side of the bottom plate portion 33, and is pivotally supported by the bottom plate portion 33 of the mount portion 31 via a pivot portion 71 at the boundary between the front part 70a and the back part 70b. The axial direction of the pivot portion 71 is a direction perpendicular to the bottom plate portion 33, that is, the vertical direction.

The swing member 70 can swing relative to the bottom plate portion 33 with the pivot portion 71 as the swing axis.

Moreover, in the present embodiment, the tobacco fixture 100 includes a switch 72 that detects a swing of the swing member 70. The switch 72 is disposed, for example, at a position corresponding to a front end portion of the mount portion 31. The switch 72 may be provided on the mount portion 31 or may be provided on the shelf 13.

As illustrated in Fig. 14(a), in a state in which the lower part 35a of the slider 35 is located behind the pivot portion 71, for example, the back part 70b, among the front part 70a and the back part 70b of the swing member 70, extends in the front-back direction along one side wall 32 of the mount portion 31.

In this state, a front end portion of the front part 70a is separated from the switch 72, and the switch 72 does not detect the front part 70a.

On the other hand, as illustrated in Fig. 14(b), when the lower part 35a of the slider 35 moves to a position in front of the pivot portion 71, the front part 70a of the swing member 70 is pushed by the lower part 35a and the swing member 70 swings with the pivot portion 71 as the fulcrum, and the front part 70a, among the front part 70a and the back part 70b, extends in the front-back direction along the one side wall 32 of the mount portion 31.

In this state, the front end portion of the front part 70a overlaps the switch 72, and the switch 72 detects the front part 70a.

A detection signal obtained by the switch 72 is input to the controller 22. When the controller 22 receives the detection signal indicating that the switch 72 has detected the front part 70a, the controller 22 recognizes that the remaining number of the tobacco products 11 in the magazine 15 has become less than or equal to a predetermined number.

In the present embodiment, the switch 72 and the controller 22 constitute a remaining-number managing unit that manages the remaining number of the tobacco products 11 in each of the plurality of accommodating areas (the magazines 15).

Thus, in the present embodiment, each of the plurality of accommodating areas is the magazine 15; the magazine 15 includes the mount portion 31 on which the plurality of tobacco products 11 are mounted in an aligned state in which the tobacco products 11 are arranged in the front-back direction, the slider 35 that is movable in the front-back direction along the mount portion 31, the urging portion 36 that urges the slider 35 forward, and the swing member 70 that swings in accordance with the position of the slider 35 in the front-back direction; and the remaining-number managing unit includes a swing detector (the switch 72, the controller 22) that detects a swing of the swing member 70.

The swing detector electrically detects a swing of the swing member 70. Preferably, the swing detector includes a pressed portion that is pressed by the swing member 70 and a press detector that detects that the pressed portion is pressed. That is, preferably, the swing detector is a press switch.

In the present embodiment, the controller 22 may cause the storage unit 26 to store a sales record for each brand based on the result of detection by the switch 72.

The controller 22 may monitor whether the number of the tobacco products 11 removed from the tobacco fixture 100 is excessive or deficient based on the result of detection by the switch 72.

### [Fifth Embodiment]

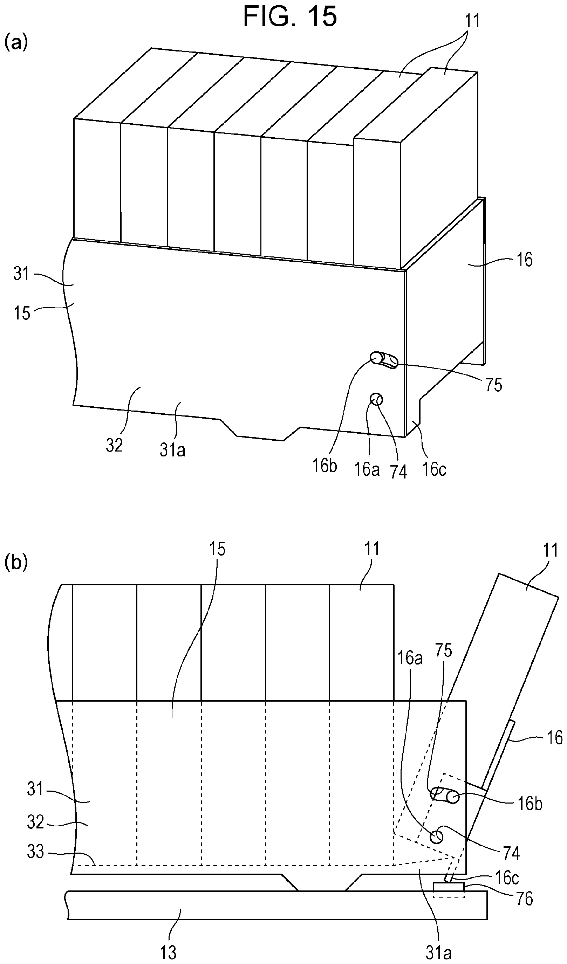

Next, referring to Figs. 15(a) and 15(b), a fifth embodiment will be described.

In the present embodiment, the front wall 16 of the magazine 15 is a flap portion and is supported by front end portions of the pair of side walls 32 in a state in which the front wall 16 can incline forward.

As illustrated in Figs. 15(a) and 15(b), the front wall 16 includes a pair of left and right pivot protrusions 16a and a pair of left and right guided protrusions 16b that are respectively provided on the left end portion and the right end portion of the front wall 16.

Here, a part of the mount portion 31 excluding the front wall 16 will be referred to as a body portion 31a.

The pivot protrusions 16a are inserted into pivot holes 74 that are respectively formed in front end portions of the left and right side walls 32 of the mount portion 31. Thus, the front wall 16 can become inclined forward relative to the body portion 31a with the left and right pivot protrusions 16a as swing fulcrums (Fig. 15(b)).

The guided protrusions 16b are inserted into arc-shaped guide holes 75 that are respectively formed in the front end portions of the side walls 32 of the mount portion 31. Thus, each the guided protrusions 16b is guided by a corresponding one of the guide holes 75. The forward inclination angle of the front wall 16 is limited by the range in which the guided protrusions 16b are guided by the guide holes 75 (an angular range around the pivot protrusions 16a).

When the tobacco product 11 mounted at the forefront position of the mount portion 31 is removed from the mount portion 31, the front wall 16 inclines forward relative to the body portion 31a (Fig. 15(b)).

After the tobacco product 11 has been removed from the mount portion 31, the front wall 16 returns under its own weight to a normal state illustrated in Fig. 15(a), that is, an upright state.

The front wall 16 has a pressing protrusion 16c that protrudes to a position below a lower end of a front end of the side wall 32 in a forward inclined state.

On the other hand, on an upper surface of a front end portion of the shelf 13, a switch 76 that is to be pressed by the pressing protrusion 16c when the front wall 16 inclines is provided.

Every time the switch 76 is pressed by the pressing protrusion 16c, the switch 76 outputs a detection signal to the controller 22.

When the detection signal is input from the switch 76, the controller 22 recognizes that the tobacco product 11 is removed from the magazine 15.

In the present embodiment, the switch 76 constitutes, together with the controller 22, an incorrect-removal detector that detects incorrect removal, which is removal of the tobacco product 11 from the magazine 15 that differs from a removal request.

The switch 76 constitutes, together with the controller 22, a remaining-number managing unit that manages the remaining number of the tobacco products 11 in each of the plurality of magazines 15. In this case, the controller 22 counts the number of detection signals input from the switch 76.

Thus, in the present embodiment, each of the plurality of accommodating areas is the magazine 15; the magazine 15 includes the mount portion 31 on which the plurality of tobacco products 11 are mounted in an aligned state in which the tobacco products 11 are arranged in the front-back direction, the slider 35 that is movable in the front-back direction along the mount portion 31, and the urging portion 36 that urges the slider 35 forward; the mount portion 31 includes the body portion 31a on which the plurality of tobacco products 11 are mounted, and the flap portion that is provided so as to be swingable with respect to the front end portion of the body portion 31a and that constitutes the front wall 16 of the mount portion 31; the flap portion inclines forward relative to the body portion 31a when one of the tobacco products 11 that is mounted at the forefront position of the mount portion 31 is removed from the mount portion 31; and the incorrect-removal detector includes a forward-inclination detector (the switch 76 and the controller 22) that detects a forward inclining motion of the flap portion.

The forward-inclination detector electrically detects a forward inclining motion of the flap portion. Preferably, the forward-inclination detector includes a pressed portion that is pressed by the flap portion and a press detector that detects that the pressed portion is pressed. That is, preferably, the forward-inclination detector is a press switch.

In the present embodiment, the remaining-number managing unit includes a forward-inclination detector (the switch 76 and the controller 22) that detects a forward inclining motion of the flap portion.

In the present embodiment, the controller 22 may cause the storage unit 26 to store a sales record for each brand based on the result of detection by the switch 76.

The controller 22 may monitor whether the number of the tobacco products 11 removed from the tobacco fixture 100 is excessive or deficient based on the result of detection by the switch 76.

In the present embodiment, the tobacco fixture 100 need not include the distance sensor 29 and the slider-position detector described above.

### [Sixth Embodiment]

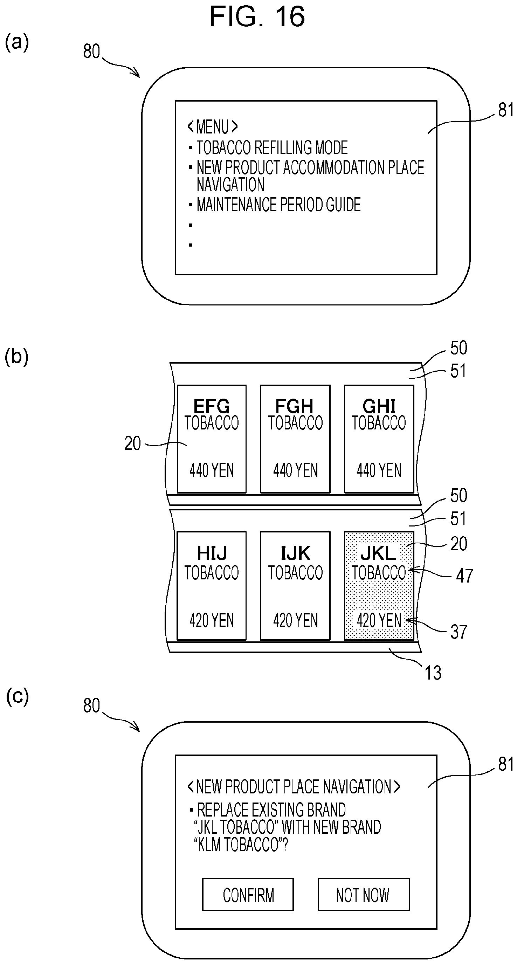

Next, referring to Figs. 16(a) to 16(c), a sixth embodiment will be described.

In an example described in the present embodiment, for example, when products to be newly handled, such as new products, are delivered to a shop, the tobacco fixture 100 guides a candidate for a magazine 15 for accommodating the newly handled products.

For example, as illustrated in Fig. 16(a), a tobacco fixture 100 includes an operation tablet 80 operated by an operator. The operation tablet 80 may also function as the brand-specifying-information acquiring unit 27 or may be different from the brand-specifying-information acquiring unit 27.

A menu screen that allows selection of various operation modes is displayed on a display screen 81 of the operation tablet 80.

Menus that are selectable on the menu screen include, for example, "New Product Accommodation Place Navigation". When an operator performs a touch operation to select "New Product Accommodation Place Navigation" on the menu screen, for example, as illustrated in Fig. 16(b), a candidate-area guide display 47 that guides a candidate for a magazine 15 for accommodating the new tobacco product 11 is displayed on a display body 20 corresponding to the magazine 15.

The candidate-area guide display 47 is, for example, a display that changes the display color of the electronic paper of the display body 20 to a noticeable color (for example, yellow).

Thus, the tobacco fixture 100 includes a new-accommodation-request receiving unit (for example, the operation tablet 80) that receives a new accommodation request (for example, a touch operation of selecting "New Product Accommodation Place Navigation") that is a request that a new tobacco product 11 be accommodated in the accommodating area (the magazine 15); and, when the new-accommodation-request receiving unit receives the new accommodation request, the display controller (the controller 22) causes the display body 20 to perform the candidate-area guide display 47 that guides a candidate for the accommodating area for accommodating the new tobacco product 11.

The controller 22 selects a display body 20 for performing the candidate-area guide display 47 by, for example, determination processing described below.

First, the controller 22 refers to the memory contents of the storage unit 26 and determines whether or not a vacant magazine 15 for which a tobacco product 11 to be accommodated has not been set exists.

If a vacant magazine 15 exists, the controller 22 causes the candidate-area guide display 47 to be performed on the display body 20 corresponding to a magazine 15 that is one of vacant magazines 15.

On the other hand, if a vacant magazine 15 does not exist, the controller 22 distinguishes and selects, for example, a magazine 15 corresponding to a brand that has not been selling well based on the sales results, and causes the candidate-area guide display 47 to be performed on the display body 20 corresponding to the magazine 15. If there are a plurality of brands whose sales results are smaller or equal to a predetermined threshold, the controller 22 may cause the candidate-area guide display 47 to be performed on each of the display bodies 20 that respectively correspond to the magazines 15 corresponding to the plurality of brands.

Moreover, for example, as illustrated in Fig. 16(c), a selection screen for selecting whether or not to confirm replacement of brands is displayed on the display screen 81.

For example, a display of "Replace existing brand 'JKL Tobacco' with new brand 'KLM Tobacco'?", and selection buttons "Confirm" and "Not now" are displayed.

When an operator selects "Confirm", the controller 22 performs update processing for registering a magazine 15 that has been the accommodation place for "JKL Tobacco" as the accommodation place for "KLM Tobacco". That is, the controller 22 rewrites the memory contents of the storage unit 26. Moreover, the controller 22 finishes the candidate-area guide display 47.

On the other hand, when the operator selects "Not now" on the selection screen shown in Fig. 16(c), the controller 22 does not rewrite the memory contents of the storage unit 26 and finishes the candidate-area guide display 47.

### [Seventh Embodiment]

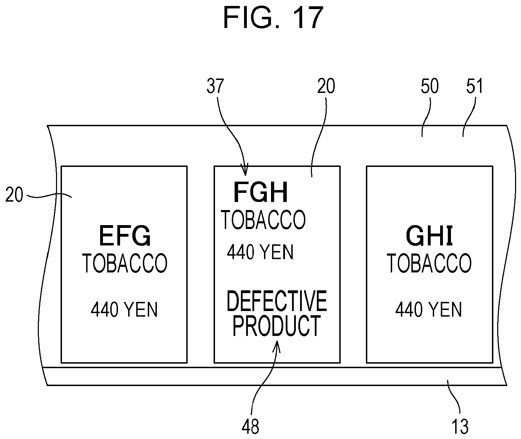

Next, referring to Fig. 17, a seventh embodiment will be described.

Fig. 17 is a front view illustrating an example of a notification display (a defective-product-information display 48) that is performed, when the controller 22 recognizes that the tobacco product 11 of a certain brand is a defective product, on a display body 20 corresponding to a magazine 15 that accommodates the tobacco product 11 that is a defective product.

For example, as illustrated in Fig. 17, by performing a display of "Defective product" as the defective-product-information display 48, an operator is prompted to pay attention and can be prevented from selling the defective product.

When an operator mistakenly removes a defective tobacco product 11 from the magazine 15, if the mistaken removal is detected, the controller 22 notifies the operator not to sell the tobacco product 11 by using a voice from a speaker (not shown).

### [Eighth Embodiment]

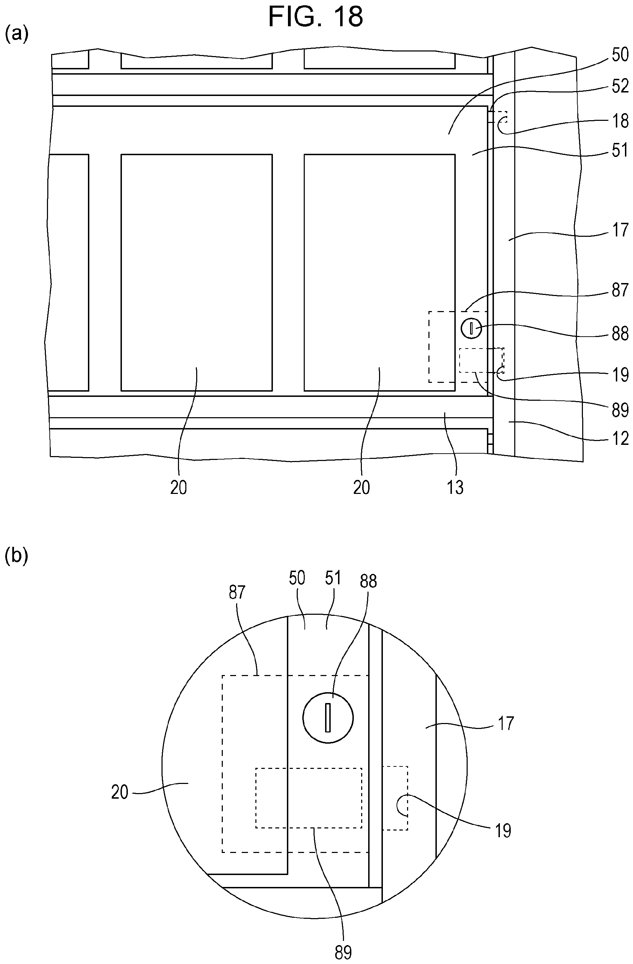

Next, referring to Figs. 18(a) and 18(b), an eighth embodiment will be described.

In the present embodiment, the tobacco fixture 100 includes a lock mechanism 87 described below so that the tobacco fixture can suppress an operator from mistakenly opening the display panel 50 in front of the magazine 15 from which the tobacco products 11 should not to be removed and can suppress an operator from mistakenly opening the display panel 50 in front of the magazine 15 that should not be refilled with the tobacco product 11.

The lock mechanism 87 makes it possible to selectively open the display panel 50 in front of the magazine 15 corresponding to brand specifying information acquired by the brand-specifying-information acquiring unit 27.

The lock mechanism 87 includes, for example, an engagement member 89; a locking actuator (not shown) such as a solenoid or a motor; a power transmission mechanism (not shown) that transmits, from the locking actuator to the engagement member 89, power for moving the engagement member 89 to an engaged position (the position shown in Fig. 18(a)) and to an unengaged position (the position shown in Fig. 18(b)); and a key-insertion portion 88 with which an operator performs a key operation to manually move the engagement member 89 to the unengaged position and to the engaged position during an electrical power failure or the like.

As illustrated in Fig. 18(a), at the engaged position, the engagement member 89 protrudes from the panel body 51, and the leading end of the engagement member 89 is inserted into an engagement hole 19 formed in the side wall 17. In the state in which the engagement member 89 is at the engaged position, when an operator attempts to open the display panel 50, the engagement member 89 becomes engaged with (latched to) the side wall 17, and the display panel 50 is restrained from being opened.

As illustrated in Fig. 18(b), at the unengaged position, the engagement member 89 is accommodated in the panel body 51, and the engagement member 89 is in a state of being extracted from the engagement hole 19. In a state in which the engagement member 89 is at the unengaged position, the engagement member 89 does not become engaged with (latched to) the side wall 17 when an operator opens the display panel 50.

The key-insertion portion 88 has a keyhole into which an unlock key (not shown) is to be inserted. By inserting the unlock key into the keyhole and rotating the unlock key, an operator can move the engagement member 89 from the engaged position to the unengaged position, and can move the engagement member 89 from the unengaged position to the engaged position.

In the example described here, the lock mechanism 87 is provided on the panel body 51 of the display panel 50 and the engagement member 89 becomes latched to the magazine accommodation rack 12 (for example, the side wall 17) in the locked state. However, the lock mechanism 87 may be provided on the magazine accommodation rack 12, and the engagement member 89 may become latched to the display panel 50 in the locked state.

In the present embodiment, in normal time, the engagement members 89 of the lock mechanisms 87 corresponding to all display panels 50 are at the engaged positions. When the brand-specifying-information acquiring unit 27 acquires brand specifying information, it becomes possible to selectively open the display panel 50 corresponding to the brand specifying information acquired by the brand-specifying-information acquiring unit 27, because the locking actuator moves the engagement member 89 under the control of the controller 22.

### [Ninth Embodiment]

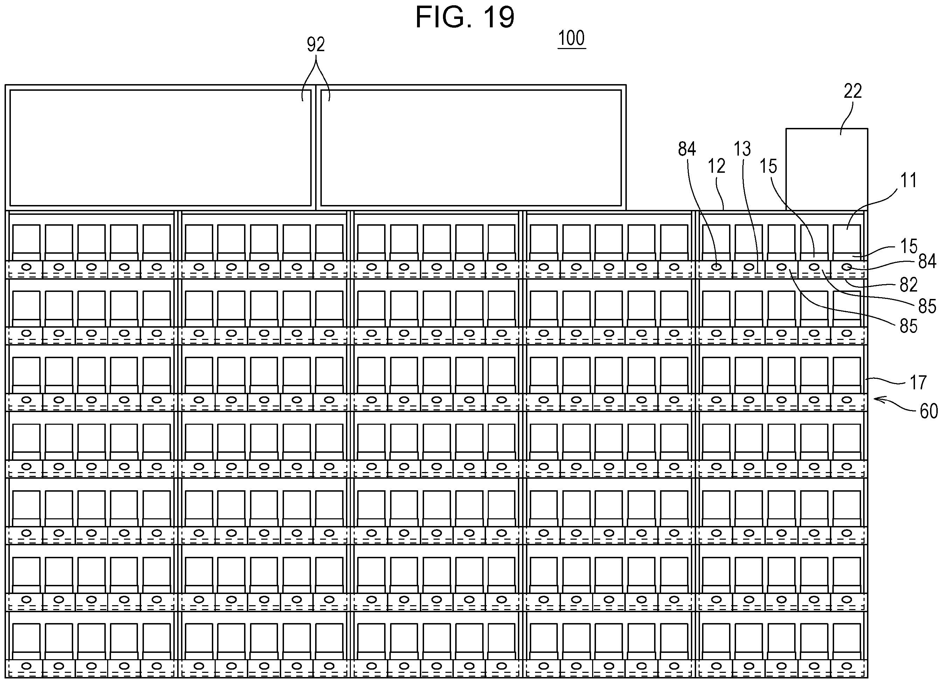

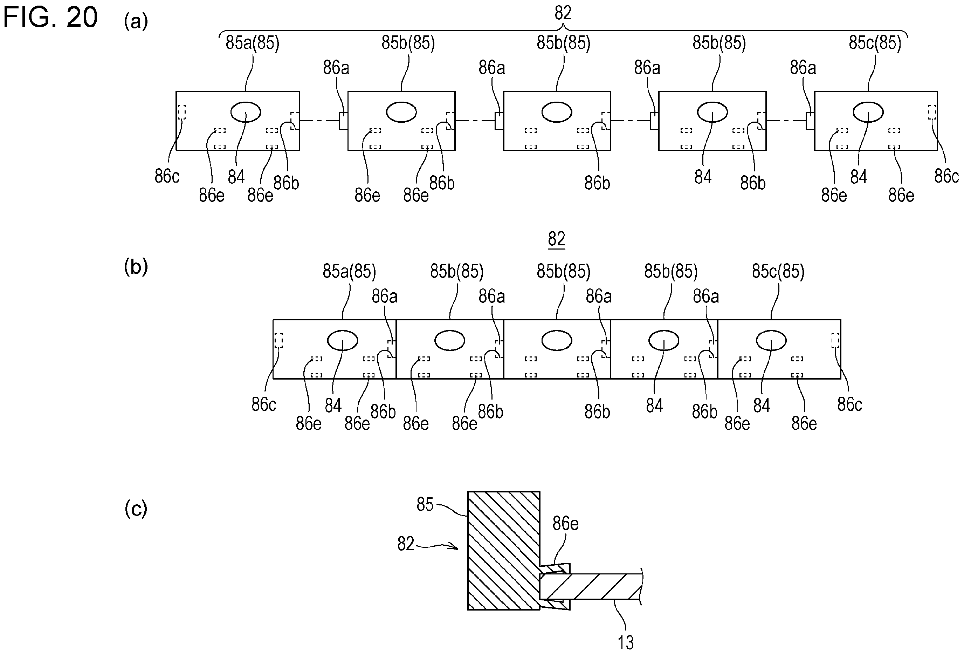

Next, referring to Figs. 19 to 20(c), a ninth embodiment will be described.

As illustrated in Fig. 19, in the present embodiment, the tobacco fixture 100 includes LED bars 82 instead of the display panels 50. Each LED bar 82 is elongated in one direction and is detachably attached to a front end portion of the shelf 13 of the magazine accommodation rack 12 in a position extending in the horizontal direction.

As illustrated in Figs. 20(a) and 20(b), the LED bar 82 includes a plurality of segments 85, each of which has an LED (Light Emitting Diode) 84, that are connected in series. In the present embodiment, each segment 85 constitutes a display body, and each segment 85 corresponds to a magazine 15. In the present embodiment, the segments 85 correspond one-to-one with the magazines 15.

Each segment 85 includes one or both of a female connector 86a and a male connector 86b for electrically and mechanically connecting the segment 85 to an adjacent segment 85.

For example, a segment 85a that constitutes one end portion of the LED bar 82 includes only the male connector 86b, among the female connector 86a and the male connector 86b; a segments 85c that constitutes the other end portion of the LED bar 82 includes the female connector 86a, among the female connector 86a and the male connector 86b; and the remaining segments 85b each include both of the female connector 86a and the male connector 86b.

As illustrated in Fig. 20(b), the male connector 86b of the segment 85 having the male connector 86b is connected to the female connector 86a of an adjacent segment 85, and thus a plurality of (for example, five) segments 85 are connected in series.

In this state, it is possible to supply electric power from one of adjacent segments 85 to the other, and it is possible to transmit a control signal from the controller 22 from one of adjacent segments 85 to the other.

The segments 85 (the segments 85a and 85c) at both ends of the LED bar 82 each include an end connector 86c that is electrically connected to a connector portion (not shown) of the side wall 17 of the magazine accommodation rack 12. The disposition of the end connector 86c is set so that the end connector 86c can be connected to the connector portion of the side wall 17 in a state in which the LED bar 82 is attached to the shelf 13.

The connector portion of the side wall 17 is connected to the controller 22 via a wire (not shown). A control signal from the controller 22 is input to the end connector 86c of the segment 85 (for example, the segment 85a) at one end of the LED bar 82 via the wire and the connector portion of the side wall 17.

Under the control of the controller 22, it is possible to individually perform turning on of the LED 84 of each segment 85.

Moreover, as illustrated in Figs. 20(a) to 20(c), each segment 85 includes, for example, a pair of upper and lower fixing engagement portions 86e that protrude backward. As illustrated in Fig. 20(c), by pushing the segment 85 backward, a front end portion of the shelf 13 is fitted into the space between the pair of fixing engagement portions 86e, and thus the segment 85 is detachably attached to the shelf 13.

That is, the LED bar 82 is attachable to and detachable from the magazine accommodation rack 12. In a state in which the LED bar 82 is attached to the magazine accommodation rack 12, each segment 85 is disposed in front of a corresponding magazine 15.

In the present embodiment, by turning on or blinking the LED 84, it is possible to perform a specific notification display such as a removal notification display, an incorrect-removal notification display, or a refilling notification display.

The LED 84 may emit single-color light, and it is also preferable that the LED 84 can emit light in a plurality of colors. Moreover, it is also preferable that the LED 84 include one or more seven-segment LEDs. By doing so, it is possible to perform a display notification of a register number and a display notification of the number of the tobacco products 11 to be removed.

Thus, in the present embodiment, the plurality of accommodating areas (the magazines 15) are arranged in an array of a plurality of rows in each of the vertical direction and the horizontal direction; a plurality of display bodies (the segments 85 in the present embodiment) are provided in correspondence with individual ones of the accommodating areas; and each of the plurality of display bodies includes a light-emitting member (for example, the LED 84). The display bodies that are adjacent to each other in the horizontal direction are electrically and mechanically connected to each other to constitute an integrated display-body group (the LED bar 82).

In the present invention, a light-emitting member of the display body is not limited to an LED and may be another light-emitting member.

Electric power is successively supplied from the display body (for example, the segment 85a) located at one end of the display-body group (the LED bar 82) to the display body (the segment 85) that is adjacent.

The tobacco fixture 100 according to the present embodiment includes an accommodation rack (the magazine accommodation rack 12) that includes the plurality of accommodating areas (the magazines 15), and the display-body group (the LED bar 82) is attachable to and detachable from the accommodation rack.

Among the display bodies (the segments 85) that are included in the display-body group (the LED bar 82), the display bodies that are adjacent to each other in the horizontal direction are attachable to and detachable from each other via the female connector 86a and the male connector 86b. Therefore, in accordance with the lateral width of the shelf 13 (and the number of the magazines 15 that are mounted side-by-side on the shelf 13), the number of the segments 85 that constitute the LED bar 82 can be easily increased or decreased. That is, by increasing or decreasing the number of the segments 85b, the number of the segments 85 that constitute the LED bar 82 can be changed.

The display body (the segment 85) according to the present embodiment is a display body that is detachably attached to a tobacco fixture (in this case, the magazine fixture 60) that includes a plurality of accommodating areas (for example, the plurality of magazines 15) that respectively accommodate a plurality of tobacco products 11 so as to be removable by an operator and an accommodation rack (the magazine accommodation rack 12) that holds the plurality of accommodating areas or includes the plurality of accommodating areas, the plurality of accommodating areas being arranged in an array of a plurality of rows in each of the vertical direction and the horizontal direction; and the display body is in the form of a display-body group (the LED bar 82) in which a plurality of display bodies that are adjacent to each other in the horizontal direction are electrically and mechanically connected to each other, and is attachable to and detachable from the accommodation rack.

In the present embodiment, the display body (the segment 85) performs, under the control of the display controller (the controller 22), display operation in such a manner as to enable identification of, among a plurality of accommodating areas, an accommodating area that corresponds to the display body.

As illustrated in Fig. 19, the tobacco fixture 100 may include a carton cabinet 92 that is mounted on the top surface of the magazine fixture 60.

In general, the tobacco products 11 are distributed in the form of a so-called carton in which the plurality of tobacco products 11 of the same brand are packed together. In general, in one carton, ten tobacco products 11 are packed together. A carton is also called a parcel.

The carton cabinet 92 is a cabinet for storing cartons, and accommodates cartons in such a way that an operator can remove cartons corresponding to the tobacco products 11 of a plurality of brands.

### [Tenth Embodiment]

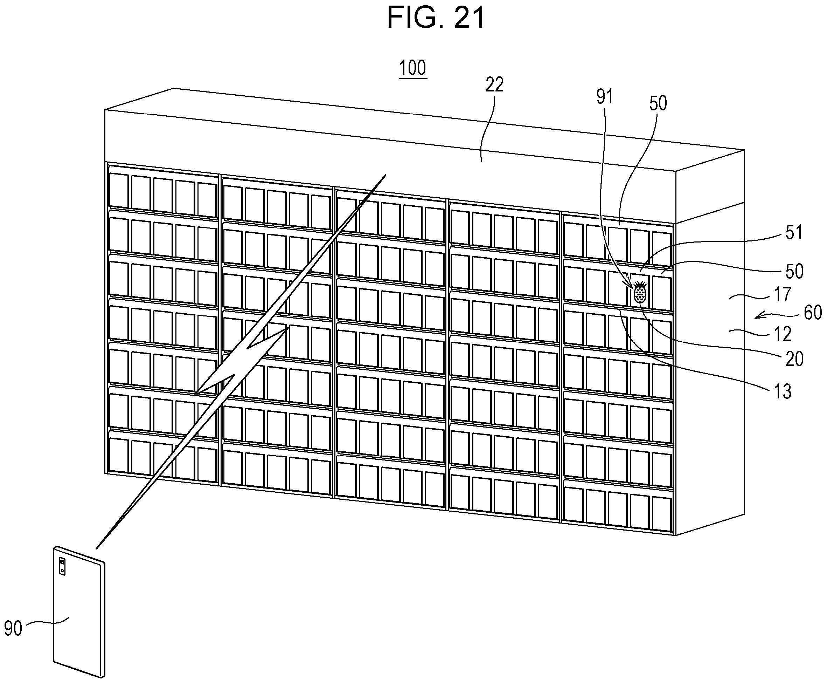

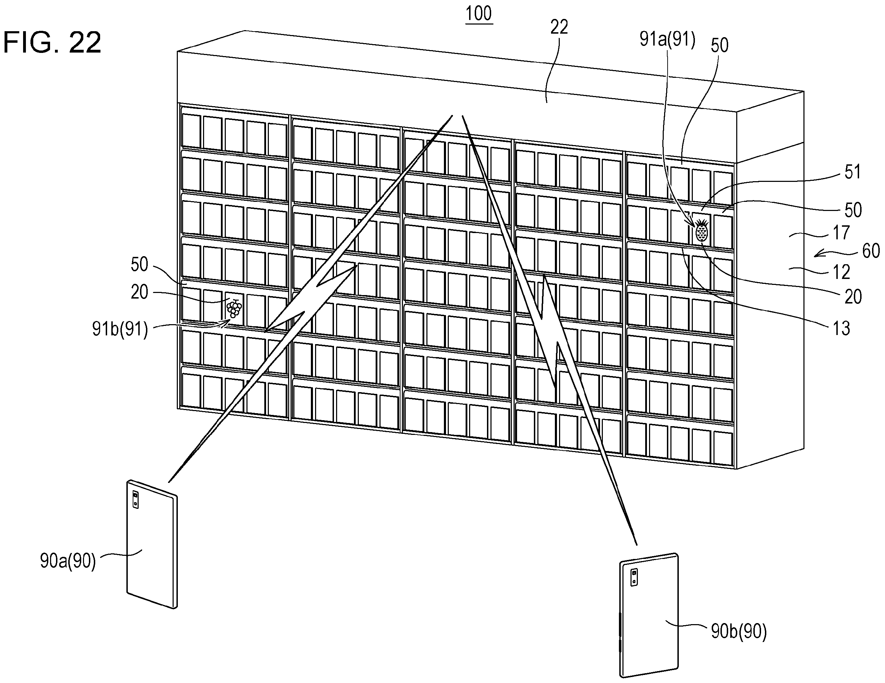

Next, referring to Figs. 21 and 22, an eleventh embodiment will be described.

In an example described in the present embodiment, the brand-specifying-information acquiring unit 27 of the tobacco fixture 100 automatically acquires brand specifying information from a mobile terminal device 90 of a user who visits a shop such as a convenience store, and the display body 20 of the tobacco fixture 100 performs a display (a specific notification display 91).

A method of communication between the mobile terminal device 90 and the tobacco fixture 100 is not particularly limited, and an example of the method is near field communication such as Bluetooth (registered trademark).

In a storage unit (not shown) of the mobile terminal device 90, information of a brand that the user usually smokes (favorite brand) is registered.

Moreover, it is assumed that, when the favorite brand of a user is sold in a shop in which the tobacco fixture 100 is set, the user has performed beforehand on the mobile terminal device 90 a setting operation of setting whether or not to perform the specific notification display 91 of notifying the location of the tobacco product 11 of the favorite brand.

In the case where the user has selected the setting for performing the specific notification display 91, when the user visits the shop with the mobile terminal device 90, the brand-specifying-information acquiring unit 27 of the tobacco fixture 100 automatically performs near field communication with the mobile terminal device 90 and obtains information on the favorite brand of the user as brand specifying information.

As a result, as illustrated in Fig. 21, the specific notification display 91 is performed on the display body 20 corresponding to the magazine 15 that accommodates the favorite brand of the user.

Therefore, the user can recognize that the specific notification display 91 is performed on the tobacco fixture 100. Thus, it is possible to increase the user's willingness to purchase.

Near field communication between the mobile terminal device 90 and the tobacco fixture 100 is performed, for example, in either of a case where the power of the mobile terminal device 90 is turned on and a case where the power is turned off.

When a plurality of users who have performed on their mobile terminal devices 90 a setting for performing the specific notification display 91 visit the shop, it is also preferable that the specific notification display 91 can be performed in a display manner for each user so that each user can easily recognize the favorite brand of the user from a distance.

As an example, a specific notification display 91 including an image of a pictogram that each user has selected (for example, the user's favorite fruit, animal, or another character) or a specific notification display 91 in a projection color that each user has selected.

In the example shown in Fig. 22, a user having a mobile terminal device 90a and a user having a mobile terminal device 90b visit the same shop, and a specific notification display 91a including an image (for example, an image of a pineapple) set in the mobile terminal device 90a and a specific notification display 91b including an image (for example, an image of grapes) set in the mobile terminal device 90b are performed in parallel.

In the example described above in the tenth embodiment, the brand-specifying-information acquiring unit 27 acquires the brand specifying information from the mobile terminal device 90. However, the brand-specifying-information acquiring unit 27 may acquire the brand specifying information from, for example, a server device (not shown) managed by the maker of the tobacco product 11.

In this case, the brand-specifying-information acquiring unit 27 may acquire, for example, only the identification information (ID information) of a user from the mobile terminal device 90 and acquires information (brand specifying information) of the favorite brand corresponding to the identification information from the server device.

The brand-specifying-information acquiring unit 27 may also acquire from the server device the information indicating whether or not a user has selected a setting for performing the specific notification display 91.

### [Eleventh Embodiment]

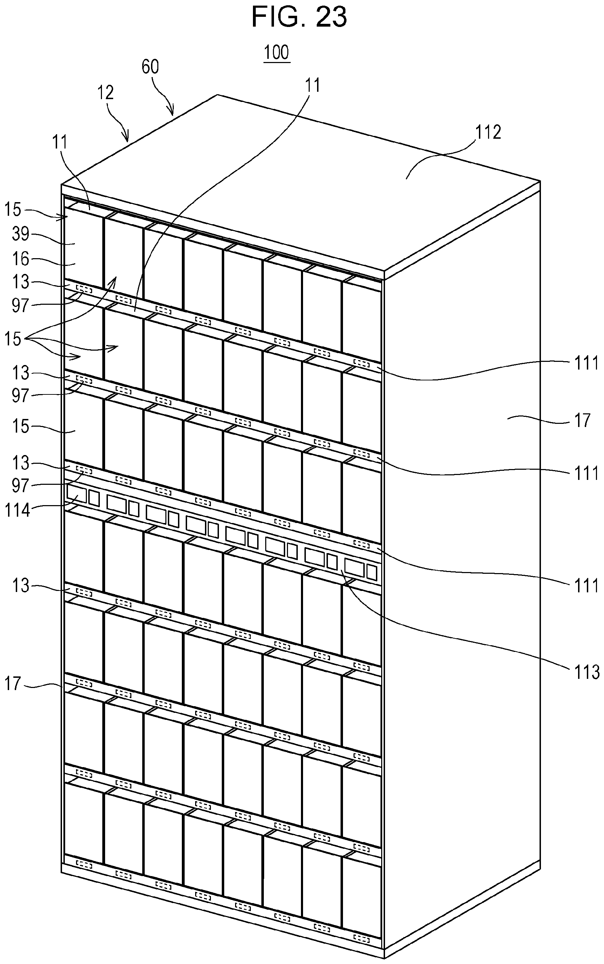

Next, referring to Figs. 23 to 26, an eleventh embodiment will be described.

Also in the present embodiment, the tobacco fixture 100 includes the plurality of the magazines 15 each of which constitutes an accommodating area and the magazine fixture 60 (accommodation rack) having the shelves 13 on which the magazines 15 are mounted.

As illustrated in Fig. 23, in the present embodiment, the tobacco fixture 100 does not include a display panel 50.

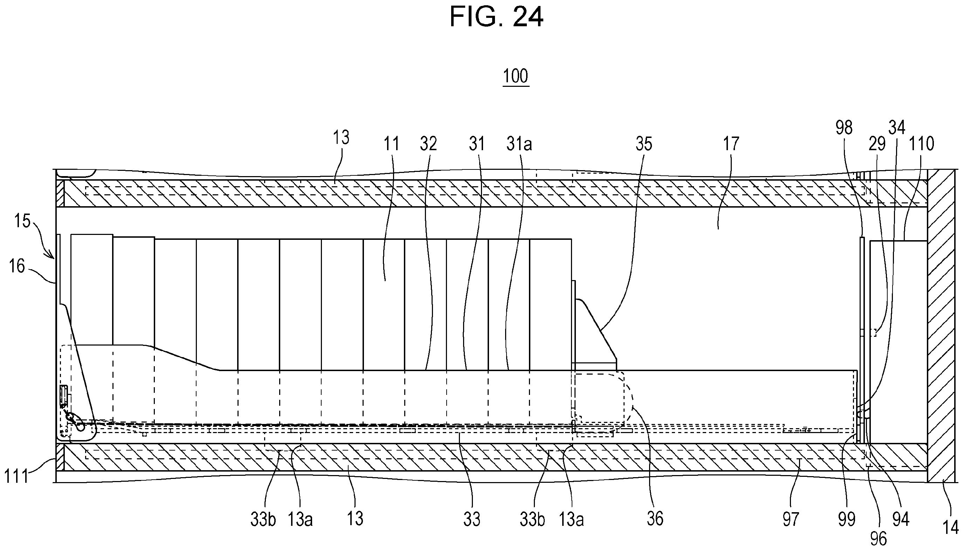

Instead, as illustrated in Fig. 24, the tobacco fixture 100 includes a light source 96 that is disposed at a position behind the magazines 15 in the magazine accommodation rack 12 and a light guide plate 97 (light guide member) that is provided in the shelf 13 and that guides light, which is output from the light source 96, toward a front end surface of the shelf 13.

On the front end surface of the shelf 13, a display tape 111 that disperses light guided via the light guide plate 97 and outputs the light forward from the shelf 13 is provided.

In the present embodiment, the display body includes the light source 96 and the light guide plate 97, and performs display operation at the front surface of the shelf 13 by using light guided via the light guide plate 97.

The controller 22 individually controls a light emission operation of each light source 96.

The light guide plate 97 is disposed so as to correspond to each individual magazine 15, and the light source 96 such as an LED is disposed so as to correspond to each light guide plate 97.

To be more specific, the light guide plate 97 is a plate-shaped member that is elongated in the front-back direction and is disposed horizontally. At the front end surface of the shelf 13, a front end surface of a corresponding light guide plate 97 is disposed near a position behind a lower part of each magazine 15. Near a back end of each light guide plate 97, a corresponding light source 96 is disposed.

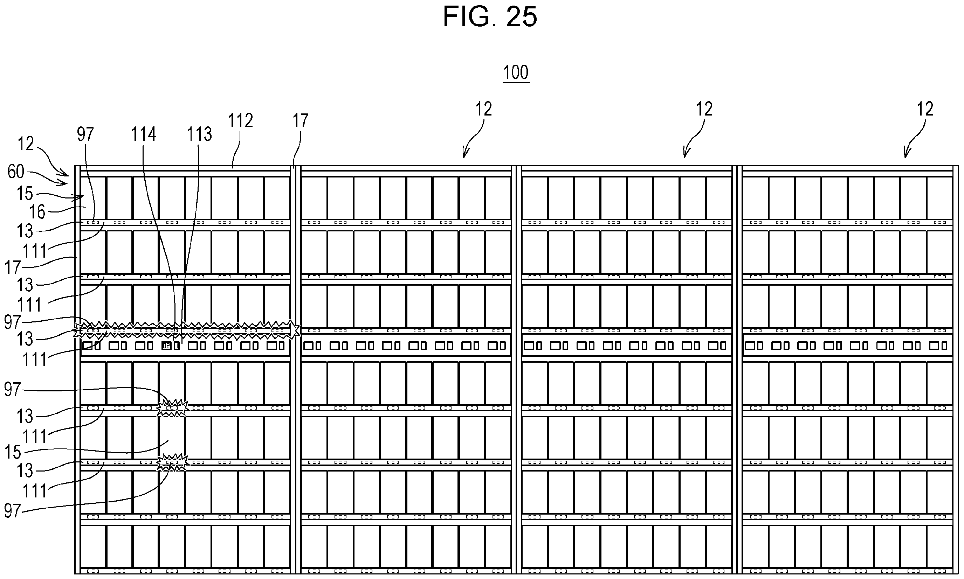

As an example, as illustrated in Fig. 23, the magazine fixture 60 has multi-tiered (for example, seven-tiered) shelves 13, a plurality of (for example, eight) magazines 15 that are mounted side by side on each tier of the shelves 13, and the plurality of magazines 15 are arranged in a matrix pattern in a front view. In the state in which the plurality of the magazines 15 are mounted side by side on the shelf 13, the magazines 15 are arranged at regular intervals. As an example, as illustrated in Fig. 25, the tobacco fixture 100 includes a plurality of (for example, four) magazine fixtures 60 that are arranged side by side.

In the present embodiment, the accommodating areas are not limited the magazines 15 and may be drawers or the like. That is, the tobacco fixture 100 includes a plurality of accommodation racks (the magazine fixtures 60), and each of the plurality of accommodation racks holds the plurality of accommodating areas or includes the plurality of accommodating areas (holds the plurality of the magazines 15 in the present embodiment).

In the present embodiment, the controller 22 (display controller) causes, as the display operation in such a manner as to enable identification of an accommodating area (a magazine 15) that corresponds to the brand specifying information, a first notification display that is a notification display of a general area and a second notification display that is a notification display of a more specific area to be performed.

To be more specific, the first notification display is a display that notifies a specific accommodation rack (for example, the leftmost magazine fixture 60) among the plurality of accommodation racks (the magazine fixtures 60). Fig. 25 shows an example in which a lighting display is performed as the first notification display to notify that the magazine 15 corresponding to the brand specifying information is disposed in the leftmost magazine fixture 60 among the four magazine fixtures 60. In the example shown in Fig. 25, the light sources 96 disposed at the back of all light guide plates 97 of the third shelf 13, from the top, of the leftmost magazine fixture 60 are caused to emit light, and the display tape 111 on the front end surface of the shelf 13 is caused to emit light in a strip shape. Thus, an operator can quickly recognize that the magazine 15 corresponding to the brand specifying information is disposed in the leftmost magazine fixture 60.

The second notification display is a display that notifies a specific accommodating area (for example, the magazine 15 at the fourth from the top and the fourth from the left) among the plurality of accommodating areas (the magazines 15) of the accommodation rack (for example, the leftmost magazine fixture 60) that is notified by the first notification display. Thus, an operator can quickly recognize the position of the magazine 15 corresponding to the brand specifying information.

To be more specific, that is, in the second notification display, display operation such that the magazine 15 corresponding to the brand specifying information is sandwiched from above and below is performed by emitting light via the light guide plate 97. Thus, an operator can more quickly recognize the position of the magazine 15 corresponding to the brand specifying information.

Thus, the tobacco fixture 100 includes the plurality of magazines 15 each of which constitutes the accommodating area and an accommodation rack (the magazine fixture 60) having the shelf 13 on which the magazines 15 are mounted; in the accommodation rack, the plurality of magazines 15 are arranged in an array of a plurality of rows in each of the vertical direction and the horizontal direction; and, a plurality of display bodies (each constituted by the light guide plate 97 and the light source 96) are provided so as to be capable of performing the display operation at positions corresponding to individual ones of the magazines at the front end surface of the shelf 13.

The display controller (the controller 22) causes display operation using a pair of the display bodies that sandwich the magazine 15 corresponding to the brand specifying information from above and below to be performed as display operation in such a manner as to enable identification of an accommodating area that corresponds to the brand specifying information (the magazines 15).

Moreover, the magazine fixture 60 has a second display unit 114 at a position corresponding to the magazines 15 in each row mounted on the magazine fixture 60.

For example, a display panel 113 that is elongated in the left-right direction is provided on a lower part of a shelf 13 at the third from above in the magazine fixture 60, and a plurality of (for example, eight) second display units 114 are provided on the display panel 113.

The second display unit 114 includes, for example, a plurality of seven-segment LEDs.

In the present embodiment, the controller 22 causes the second display unit 114 to perform display operation of displaying the purchase number and display operation of displaying information indicating which sales terminal, among the plurality of sales terminals, is to be used to sell the tobacco product 11 to be removed.

For example, as illustrated in Fig. 25, by performing a display notification of "02" and " 1", a salesperson in charge of first register among the plurality of sales terminals can easily recognize that the salesperson is in charge of the task of removing two tobacco products 11 from the magazine 15 corresponding to the second notification display and selling the tobacco products 11.

The controller 22 controls display operation of each second display unit 114.

To be more specific, the controller 22 causes the second display units 114 in the same row as the magazine 15 corresponding to the brand specifying information (the second display units 114 that are aligned vertically with the magazine 15) to perform the display notification described above. Therefore, an operator can quickly check both of the second notification display and the display notification on the second display unit 114 and can recognize the contents.

If orders for a plurality of tobacco products 11 are received at a plurality of sales terminals at timings that overlap each other and the brands of the tobacco products 11 are those that are arranged in the same row in the tobacco fixture 100, first, the second notification display and the display notification by the second display unit 114 are performed for the tobacco product 11 for which the order has been received earlier. Subsequently, when the tobacco product 11 for which the order has been received earlier is removed, next, the second notification display and the display notification by the second display unit 114 are performed for the tobacco product 11 for which the order has been received later.

On the other hand, if orders for a plurality of tobacco products 11 are received at a plurality of sales terminals at timings that overlap each other and the brands of the tobacco products 11 are those that are arranged in different rows in the tobacco fixture 100, the second notification display and the display notification by the second display unit 114 (in some cases, the first notification display, the second notification display, and the display notification by the second display unit 114) regarding the tobacco products 11 can be performed in parallel.

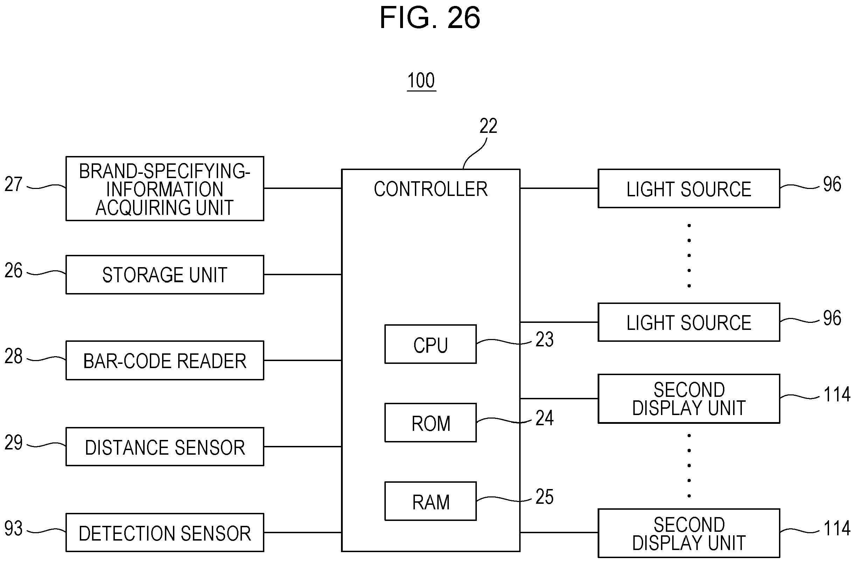

The magazine fixture 60 includes a detection sensor 93 (Fig. 26) that detects the back wall 34 of the magazine 15 when the magazine 15 is disposed at a predetermined reference position on the shelf 13.

The detection sensor 93 is provided, for example, in a control box 110 (Fig. 24) that is mounted at the back end of the shelf 13.

A partition plate 98, which separates an area in which the control box 110 is disposed and an area in which the magazine 15 in front of the disposition area of the control box 110 from each other, stands in front of the control box 110. The partition plate 98 has, for example, a flat plate-like shape and a plate surface thereof faces in the front-back direction.

On the control box 110, for example, a swingable lever 94 is provided, and the lever 94 protrudes forward through an opening formed in the partition plate 98.

When the magazine 15 is disposed at a predetermined reference position on the shelf 13 as illustrated in Fig. 24, the lever 94 is pressed backward by the back wall 34 of the magazine 15. The detection sensor 93 detects whether or not the lever 94 is pressed backward. The result of detection by the detection sensor 93 is input to the controller 22.

In a non-detection state in which pressing of the lever 94 is not detected by the detection sensor 93, the controller 22 recognizes that the magazine 15 has moved from the predetermined reference position to another position. In a detection state in which pressing of the lever 94 is detected by the detection sensor 93, the controller 22 recognizes that the magazine 15 has returned to the predetermined reference position.

Moreover, the controller 22 causes the storage unit 26 to store a history of detection by the detection sensor 93. That is, the controller 22 causes the storage unit 26 to store a history of movement of the magazine 15 from the reference position to another position and a history of movement (return) of the magazine 15 from the other position to the reference position.

Thus, the tobacco fixture 100 includes the plurality of magazines 15 each of which constitutes the accommodating area; the accommodation rack (the magazine fixture 60) having the shelf 13 on which the magazines 15 are mounted; a magazine-movement detector (for example, constituted by the detection sensor 93, the lever 94, and the controller 22) that detects that the magazine 15 has moved from a reference position on the shelf 13 to another position and that the magazine 15 has returned to the reference position; and a historical-information storage unit (the storage unit 26) that stores a history of detection by the magazine-movement detector.

Thus, an administrator of the tobacco fixture 100 can recognize, for example, that the magazines 15 has moved from the reference position to another position although an operation of specifying the brand and the purchase number of the tobacco products 11 has not been performed.

The tobacco fixture 100 further includes a notifying unit (not shown) such as a speaker. The controller 22 causes the notifying unit to perform a notification operation when the magazine 15 moves from the reference position to another position and when a predetermined condition is satisfied before the magazine 15 returns to the reference position. The predetermined condition is, for example, an elapse of a predetermined time (for example, one minute).

Thus, the tobacco fixture 100 further includes the magazine-movement notifying unit that notifies that the magazine 15 has moved from the reference position to another position.

Thus, when the magazine 15 moves to a position other than the reference position and when the magazine 15 is forgot to be returned to the reference position, the tobacco fixture 100 can notify an operator of such an event.

A magnet 99 is affixed to the back surface of the back wall 34. The partition plate 98 is made of a magnetic substance such as stainless steel.

In a state in which the magazine 15 is disposed at the reference position, the magnet 99 is magnetically attracted to the partition plate 98, and the magazine 15 can be stably disposed at the reference position.

In the present embodiment, the distance sensor 29 is also provided in the control box 110. An opening is formed in a part of the partition plate 98 in front of the distance sensor 29, and the distance sensor 29 performs detection through the opening in the partition plate 98.

Here, if the detection by the distance sensor 29 is performed at all times, power consumption increases and the distance sensor 29 deteriorates quickly. Therefore, the detection by the distance sensor 29 is temporarily activated (detection state) when a removal request for removing the tobacco product 11 from the magazine 15 occurs, and subsequently, the detection is deactivated (detection stopped state) when a predetermined termination condition (for example, an elapse of a predetermined time such as one minute) is satisfied.

Thus, each of the plurality of accommodating areas is the magazine 15; the magazine 15 includes the mount portion 31 on which the plurality of tobacco products 11 are mounted in an aligned state in which the tobacco products 11 are arranged in the front-back direction, the slider 35 that is movable in the front-back direction along the mount portion 31, and the urging portion 36 that urges the slider 35 forward; and the tobacco fixture 100 includes a remaining-number detector (for example, constituted by the distance sensor 29 and the controller 22) that detects the number of the tobacco products 11 on the mount portion 31 or increase and decrease of the number. That is, the remaining-number detector includes the distance sensor 29 that is provided behind the slider 35 and that detects the distance between the distance sensor 29 and the slider 35 or the distance between the distance sensor 29 and one of the tobacco products 11 at the tail end.

The remaining-number detector temporarily activates detection by the distance sensor 29 (detection state) when a removal request for removing the tobacco product 11 from the magazine 15 occurs, and subsequently deactivates the detection (detection stop state) when a predetermined termination condition is satisfied.

By doing so, the power consumption of the tobacco fixture 100 can be reduced, and the service life of the distance sensor 29 can be prolonged.

To be more specific, detection by the distance sensor 29 may be performed step by step as described below.

That is, when a removal request for removing the tobacco product 11 from the magazine 15 occurs, in an initial state of the detection by the distance sensor 29, precise detection of the number in the magazine 15 is not performed and only a change in the number is simply detected. If a change in the number is detected, detailed detection for accurately counting the number of the tobacco products 11 on the mount portion 31 is performed.

By doing so, after the movement of the magazines 15 (the movement of the slider 35) has become stable, the number of the tobacco products 1 1 on the mount portion 31 can be accurately counted.

If the predetermined termination condition is an elapse of a predetermined time, it is also preferable that the predetermined time increases as the number of the tobacco products 11 to be removed based on a removal request increases.

Here, when an operator refills one of the accommodating areas (the magazines 15) with a tobacco product 11, regarding the accommodating area (the magazine 15) that is being refilled, the display controller (the controller 22) does not perform display operation based on a removal request for the tobacco product 11. When refilling is finished and the magazine 15 is returned to the reference position, the controller 22 recognizes this based on a result of detection by the detection sensor 93. Thus, regarding the magazine 15, it becomes possible again to perform display operation based on a removal request for the tobacco product 11.

On the other hand, regarding the accommodating area (the magazine 15) other than the accommodating area (the magazine 15) that is being refilled, display operation based on a removal request for the tobacco product 11 is performed.

That is, except for the magazine 15 that is being refilled, a state in which it is possible to perform display operation based on a removal request continues, and thus the chance of selling the tobacco products 11 can be maximally suppressed from being spoiled.

As illustrated in Fig. 24, in the present embodiment, the front wall 16 of the magazine 15, that is, the flap portion has dimensions such that the front wall 16 substantially covers the entirety of the tobacco products 11 mounted on the magazine 15 in a front view.

As illustrated in Figs. 23 and 25, the front walls 16 of the magazines 15 that are adjacent to each other are disposed close to each other with substantially no gap therebetween. A gap between the upper edge of the front wall 16 of the magazine 15 and the lower edge of the shelf 13 (or a top plate 112) one tier above is a small gap into which a finger can be inserted.

An operator can easily remove the tobacco product 11 from the magazine 15 by inclining the front wall 16 forward by inserting a finger into the gap between the front wall 16 and the shelf 13 (or the top plate 112) one tier above.

As illustrated in Fig. 24, the body portion 31a of the mount portion 31 has protruding pieces 33b that protrude downward from both of left and right side edges of the bottom plate portion 33. The protruding pieces 33b protrude to positions below the lower edges of the side walls 32. The protruding pieces 33b have, for example, flat-plate shapes whose plate surfaces face in the left-right direction. For example, the protruding pieces 33b are formed at two positions at each of the left edge and the right edge of the body portion 31a. The protruding pieces 33b are used to position the magazine 15 with respect to the shelf 13.

In the upper surface of the shelf 13, positioning holes 13a, which have shapes into which the protruding pieces 33b of the magazine 15 can be inserted, are formed at positions corresponding to the protruding pieces 33b.

In a state in which the magazine 15 is mounted at the reference position, each protruding piece 33b is inserted into a corresponding one of the positioning holes 13a.

Thus, each magazine 15 can be mounted on the shelf 13 in a state in which the magazine 15 is positioned in the horizontal direction.

### [Twelfth Embodiment]

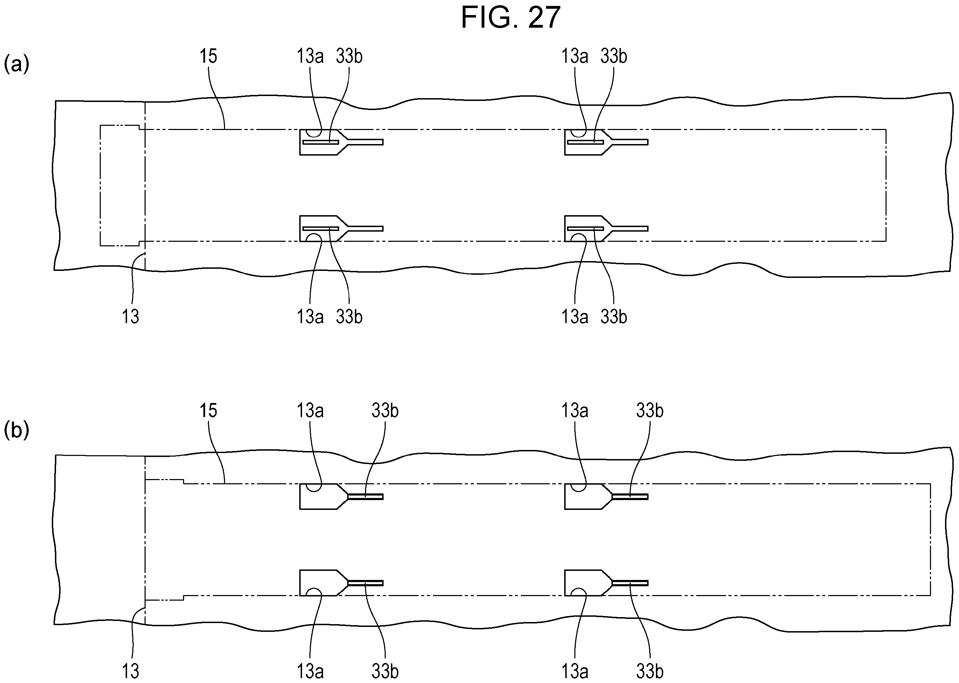

Next, referring to Figs. 27(a) and 27(b), a twelfth embodiment will be described.

In the present embodiment, a back part of the positioning hole 13a of the shelf 13 has a width that is substantially equal to the width of the protruding piece 33b of the magazine 15, and a front part of the positioning hole 13a has a large width.

A middle part of the positioning hole 13a between the front part and the back part is tapered backward.

Therefore, when disposing the magazine 15 on the shelf 13, even if the magazine 15 is slightly displaced in the lateral direction, each protruding piece 33b of the magazine 15 can be easily placed down into the front part of each positioning hole 13a (see Fig. 27(a)). Subsequently, by pushing the magazine 15 backward, each protruding piece 33b can be centered by the middle part of each positioning hole 13a, and each protruding piece 33b can be guided to the back part of the positioning hole 13a (see Fig. 27(b)).

Thus, the magazine 15 can be easily mounted at a predetermined position on the shelf 13.

Heretofore, embodiments have been described with reference to the drawings. However, these embodiments are examples of the present invention, and various configurations other than those described above may be used.

In each example described above, the tobacco fixture 100 includes the magazine fixture 60, and the accommodating areas are the magazines 15. However, the tobacco fixture 100 may be a drawer rack having drawers each of which can accommodate a plurality of tobacco products 11. In this case, each of the drawers constitutes an accommodating area, and the display body is provided on the front surface of the drawer.

The tobacco fixture 100 may be a ceiling-hung fixture.

In an example described above, a salesperson inputs the number of the tobacco products 11 that a purchaser wants to purchase to the brand-specifying-information acquiring unit 27. However, the present invention is not limited to this example. Simply, a salesperson may orally ask a purchaser about the number, and the salesperson may remove the number of the tobacco products 11 heard from the purchaser from an accommodating area.

A purchaser may voluntarily perform an operation of specifying the brand of the tobacco product. In this case, for example, the purchaser selects the type of the tobacco product 11 that the purchaser wants to purchase by operating a touch panel. That is, by operating the touch panel, the purchaser selects purchase of the tobacco product and further specifies a brand to be removed from the tobacco fixture 100 by selecting the brand from a brand list displayed on the touch panel. Also in this case, when the brand specifying operation is performed, the removal notification display 38 is performed on the display body 20 corresponding to a magazine 15 in which the specified tobacco product 11 is accommodated. Thus, a salesperson can recognize the position of the magazine 15 from which the tobacco product 11 is to be removed, and thus can remove the tobacco product 11 from the magazine 15 and perform sales processing. A purchaser may voluntarily perform the operation of removing the tobacco product 11 from the magazine 15 in accordance with the removal notification display 38.

Also in a case where the purchaser specifies a brand of the tobacco product 11, the purchaser may be enabled to specify the brand by performing voice input of the brand name to a microphone. Also in this case, when the brand is specified, the removal notification display 38 is performed on a display body 20 corresponding to a magazine 15 in which the specified tobacco product 11 is accommodated. That is, control that causes the display body 20 corresponding to the magazine 15 in which the specified tobacco product 11 is accommodated to be noticeable is performed.

Thus, the brand-specifying-information acquiring unit 27 acquires brand specifying information that is input by a purchaser (via, for example, a selection operation or voice input).

An operation with which a purchaser specifies a brand of tobacco product may be an operation such that the purchaser holds the bar code of the tobacco product 11 in front of a bar-code reader to cause the bar-code reader to read the bar code.

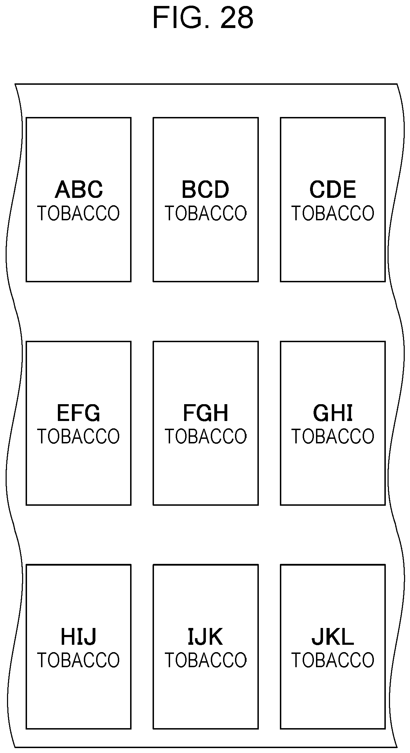

On a display screen of a display device of the tobacco fixture 100 (for example, a touch panel operation screen of an operation tablet or the like), for example, as illustrated in Fig. 28, images of the tobacco products 11 accommodated in the magazines 15 of the tobacco fixture 100 and the like may be displayed in an arrangement corresponding to (the same as) the arrangement of the magazines 15 in the tobacco fixture 100. That is, the tobacco fixture 100 includes, for example, the display device and a display-device display controller that causes the display device to perform an image display as illustrated in Fig. 28.

Moreover, for example, in a case where the brand-specifying-information acquiring unit 27 of the tobacco fixture 100 automatically acquires brand specifying information from the mobile terminal device 90 of a user as in the tenth embodiment, on the operation screen illustrated in Fig. 28, a display notification of the position of the tobacco product 11 of a brand corresponding to the acquired brand specifying information may be performed. Also in this case, a purchaser or a salesperson can easily perform a purchasing operation or sales processing of the tobacco product 11 corresponding to the brand specifying information.

Selection of the tobacco product 11 to be purchased may be enabled or notification of the accommodation position of the tobacco product 11 to be purchased may enabled by performing an operation using the mobile terminal device 90 of a user to perform a selection operation on a touch-panel operation screen of an operation tablet.

A plurality of types of dummy cards corresponding to various types of tobacco products 11 may be set in a dummy-card holder provided on a sales counter or the like, and a purchaser may be enabled to voluntarily specify a brand by selecting from the dummy card holder a dummy card corresponding to the tobacco product 11 that the purchaser wants to purchase and by causing brand specifying information to be read from the dummy card.

In this case, in the dummy card, for example, an RFID (Radio Frequency Identification) chip that stores brand specifying information of a corresponding tobacco product 11 and the like is mounted. Information stored in the RFID chip of the dummy card is read by an RFID reader of the tobacco fixture 100.

By managing historical information on pulling out (moving) of a dummy card from the dummy card holder, for example, data management can be performed in association with a result as to whether a tobacco product 11 corresponding to the dummy card is actually purchased or is not actually purchased when the dummy card is moved from the dummy card holder. Thus, it is possible to collect and manage information on the purchase behavior of purchasers.

For example, each display body 20 includes electronic paper. As described above, in normal time, the display body 20 corresponding to each magazine 15 (accommodating area) is caused to perform a normal display that corresponds to the tobacco product 11 accommodated in the magazine 15; and, when brand specifying information is acquired, the display body 20 corresponding to the magazine 15 that corresponds to the brand specifying information is caused to perform a specific notification display in a manner different from the normal display. In this case, the normal display may be a colorless display (a state in which supply of electric power to the electronic paper is turned off). When the normal display is not performed (for example, when an order for a tobacco product 11 is received after age confirmation), various information displays such as advertisement display and a display of campaign information may be performed on each individual display body 20 or a set of a plurality of display bodies 20.

As the magazine accommodation rack 12 of the tobacco fixture 100, racks of various sizes or shapes may be prepared, and the racks may be enabled to be selectively used in combination in accordance with the setting space of a shop.

To be more specific, as the magazine accommodation rack 12, a plurality of types that differ in the number of the magazines 15 that can be arranged in the lateral-width direction and differ from each other in the width, a plurality of types that differ from each other in the height and differ from each other in the number of tiers of the shelves 13, a plurality of types that differ from each other in the depth, and the like are prepared. From these, a plurality of magazine accommodation racks 12 can be selectively used in combination. By doing so, the freedom in the layout of the tobacco fixture 100 is increased, and thus it is possible to realize a layout such that the width and the height of the entirety of the tobacco fixture 100 are optimized in accordance with the setting space in each individual shop.

Moreover, preferably, by selecting a combination of a plurality of magazine accommodation racks 12, information indicating the brand of the tobacco products 11 accommodated in each magazine 15 (information stored in the storage unit 26) is updated.

The magazine accommodation racks 12 that are disposed adjacent to each other may be in contact with each other or may be set with a column, which is set in a shop, therebetween. If a beam that protrudes from a ceiling surface or a wall exists in a shop, the magazine accommodation rack 12 having a small height can be selected and set locally so as to avoid the beam. The plurality of magazine accommodation racks 12 need not to be arranged side by side and may be enabled to be arranged so as to be stacked.

In order to couple a plurality of magazine accommodation racks 12 that are disposed adjacent to each other and to couple a plurality of magazine accommodation racks 12 that are disposed so as to be stacked on each other, the side wall 17, the top surface, or the bottom plate portion of each magazine accommodation rack 12 may include a coupling mechanism.

The controller 22 may manage at any time the status of use of the tobacco fixture 100 and the status of deterioration of each component of the tobacco fixture 100.

For example, if the controller 22 determines that the time for replacement of a component (as an example, the display body) of the tobacco fixture 100 has arrived, for example, a component-replacement information display "Replace this display body 0120-XXX-XXX." is performed. An operator can receive component replacement service by calling the phone number included in the component-replacement information display.

For example, there may be a case where the tobacco fixtures 100 of a plurality of shops are communicably connected to a server device (not shown) via a network, and the server device may collect various information items (such as sales records) at any time. In such a case, if a failure such as disconnection of the network occurs, for example, a notification display indicating the occurrence of the communication failure may be performed on either of the display bodies.

In the example described above in the first embodiment, the pivots 52 of the display panel 50 are directly attached to the magazine accommodation rack 12. However, for example, the pivots 52 of the display panel 50 may be pivotally supported by a pair of left and right attachment members that are detachably attached to the magazine accommodation rack 12 (for example, the side walls 17). By doing so, the display panel 50 having the display bodies 20 can be easily attached to an existing magazine accommodation rack 12.

The tobacco fixture 100 may include, as a display body, a plurality of opposite-side display bodies that are disposed on a side opposite to a removal side toward which the tobacco products 11 are removed from individual ones of the accommodating areas. In this case, the display controller (the controller 22) causes one of the opposite-side display bodies that corresponds to an accommodating area that corresponds to the brand specifying information acquired by the brand-specifying-information acquiring unit 27 to perform display operation.

For example, in the first embodiment described above, the magazine fixture 60 is a so-called front fixture that is set on a sales counter; and the display body 20 is provided on the back wall 34 of the magazine 15 or on a part of the back wall 14 of the magazine accommodation rack 12 located behind each magazine 15 (that is, on the side of a purchaser attended at the sales counter). The controller 22 causes, for example, each display body 20 to perform various displays for the purchaser. As an example, the controller 22 causes a display of identification information (for example, a QR code (registered trademark)) for joining a campaign corresponding to a tobacco product 11 accommodated in a magazine 15 corresponding to brand specifying information acquired by the brand-specifying-information acquiring unit 27 and the like to be selectively performed on a display body 20 that is an opposite-side display body corresponding to the magazine 15. On the display body 20 that is an opposite-side display body, a display that serves as a substitute for a price card, such as the price of the tobacco product 11 and the brand name, may be performed.

In this case, as in the first embodiment, a display body 20 may be disposed also on the front side (that is, the salesperson side) of the magazines 15 and a notification display similar to that in the first embodiment may be performed on the display body 20 on the front side, or a display body 20 need not be disposed on the front side of the magazine 15.

It is also preferable that the tobacco fixture 100 be configured to raise an alert (alarm) if a person other than a person who is authorized to remove the tobacco product 11 from the tobacco fixture 100 (hereafter, a removal authorized person) tries to remove the tobacco product 11 from the tobacco fixture 100. The removal authorized person may be a salesperson or may be a purchaser.

For example, in the first embodiment, removal of the tobacco product 11 from the magazine 15 is performed in a state in which the display panel 50 having the display body 20 on which the removal notification display 38 is performed is open. In this case, the tobacco fixture 100 includes, for example, an opening operation detection sensor that detects an operation of opening the display panel 50, an authentication processor that performs authentication processing for determining whether or not an operator who has performed an operation of opening the display panel 50 is a removal authorized person, and an alert-raising unit that raises an alert if the authentication processor determines that the operator who has performed the operation of opening the display panel 50 is not a removal authorized person.

The authentication processor includes, for example, a face-image information storing unit that stores face-image information that has been acquired beforehand from a photograph of the face of a removal authorized person of the person's ID card (driver's license or the like), and an image capturing unit that captures an image of the face of an operator who has performed an operation of opening the display panel 50. The authentication processor compares the face image captured by the image capturing unit with the face image information stored in the face-image information storing unit and determines whether or not the operator is a removal authorized person. However, any of various other authentication methods may be used as an authentication method used by the authentication processor.

An alert may be raised when the tobacco product 11 is removed from the magazine 15 without permission, instead of when the display panel 50 is simply opened without permission. That is, an alert may be raised when a person other than a removal authorized person opens the display panel 50 and the remaining number in the magazine 15, which is managed by the remaining-number managing unit, decreases.

Such a configuration is particularly useful in a configuration such that the tobacco fixture 100 is a front fixture and a purchaser voluntarily removes the tobacco product 11 from the tobacco fixture 100. In this case, preferably, the authentication processor also performs age confirmation.

In an example described above, the display controller (the controller 22) performs control to cause the display body 20 to perform display operation in such a manner as to enable identification of, among a plurality of accommodating areas, an accommodating area that corresponds to brand specifying information acquired by the brand-specifying-information acquiring unit 27. However, the present invention is not limited to this example.

Thus, as an example, a tobacco fixture includes a plurality of accommodating areas each of which accommodates a plurality of tobacco products so as to be removable by an operator, a display body that is provided in correspondence with the accommodating areas, and a display controller that controls display operation of the display body.

Preferably, the display controller causes each display body to perform a display that corresponds to a tobacco product accommodated in an accommodating area that corresponds to the display body.

Various constituent elements of the present invention need not be elements that are independent from each other, and it is allowed that, for example, one constituent element is a part of another constituent element and that a part of a constituent element and a part of another constituent element overlap.

The present embodiment includes the following technological ideas.
(1) A tobacco fixture comprising:
   a plurality of accommodating areas each of which accommodates a plurality of tobacco products so as to be removable by an operator;
   a brand-specifying-information acquiring unit that acquires brand specifying information that specifies a brand of the tobacco products;
   a display body that is provided in correspondence with the accommodating areas; and
   a display controller that controls display operation of the display body,
   wherein the display controller performs control to cause the display body to perform display operation in such a manner as to enable identification of, among the plurality of accommodating areas, an accommodating area that corresponds to the brand specifying information acquired by the brand-specifying-information acquiring unit.
(2) The tobacco fixture according to (1), comprising:
   a plurality of the display bodies that are provided in correspondence with individual ones of the accommodating areas,
   wherein the display controller performs control to cause one of the display bodies that corresponds to, among the plurality of accommodating areas, an accommodating area that corresponds to the brand specifying information to perform display operation.
(3) The tobacco fixture according to (2), wherein the display controller performs control to cause the display body corresponding to the accommodating area that corresponds to the brand specifying information to be noticeable compared with the other display bodies.
(4) The tobacco fixture according to any one of (1) to (3),
   wherein the brand-specifying-information acquiring unit acquires a removal request for removing a tobacco product and the brand specifying information corresponding to the removal request, and
   wherein the display controller causes the display body to perform a removal notification display that prompts removal of the tobacco product from the accommodating area.
(5) The tobacco fixture according to (4), wherein the display controller causes the display body to display number-specifying information indicating a number of tobacco products that correspond to the removal request and that are to be removed from the accommodating area.
(6) The tobacco fixture according to (4) or (5), wherein the display controller causes the display body to display sales-terminal specifying information indicating which sales terminal, among a plurality of sales terminals that are set in a shop, is to be used to sell a tobacco product corresponding to the removal request.
(7) The tobacco fixture according to any one of (4) to (6), comprising:
   an incorrect-removal detector that detects incorrect removal that is removal of the tobacco product from the accommodating area that differs from the removal request,
   wherein, when the incorrect removal occurs, the display controller causes the display body to perform an incorrect-removal notification display indicating that the removal is incorrect.
(8) The tobacco fixture according to (7),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward,
   wherein the mount portion includes
   a body portion on which the plurality of tobacco products are mounted, and
   a flap portion that is provided so as to be swingable with respect to a front end portion of the body portion and that constitutes a front wall of the mount portion,
   wherein the flap portion inclines forward relative to the body portion when one of the tobacco products that is mounted at a forefront position of the mount portion is removed from the mount portion, and
   wherein the incorrect-removal detector includes a forward-inclination detector that detects a forward inclining motion of the flap portion.
(9) The tobacco fixture according to (7),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward, and
   wherein the incorrect-removal detector includes a slider-position detector that detects a position of the slider in the front-back direction.
(10) The tobacco fixture according to (7),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward, and
   wherein the incorrect-removal detector includes a distance sensor that is provided behind the slider and that detects a distance between the distance sensor and the slider or a distance between the distance sensor and one of the tobacco products at a tail end.
(11) The tobacco fixture according to any one of (1) to (10), further comprising:
   a remaining-number managing unit that manages a remaining number of the tobacco products in each of the plurality of accommodating areas,
   wherein the display controller causes the display body to perform a refilling notification display that prompts refilling of the accommodating area with the tobacco products in accordance with a result of management by the remaining-number managing unit.
(12) The tobacco fixture according to (11),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion,
   an urging portion that urges the slider forward, and
   a swing member that swings in accordance with a position of the slider in the front-back direction, and wherein the remaining-number managing unit includes a swing detector that detects a swing of the swing member.
(13) The tobacco fixture according to (11),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward,
      wherein the mount portion includes
   a body portion on which the plurality of tobacco products are mounted, and
   a flap portion that is provided so as to be swingable with respect to a front end portion of the body portion and that constitutes a front wall of the mount portion,
   wherein the flap portion inclines forward relative to the body portion when one of the tobacco products that is mounted at a forefront position of the mount portion is removed from the mount portion, and
   wherein the remaining-number managing unit includes a forward-inclination detector that detects a forward inclining motion of the flap portion.
(14) The tobacco fixture according to (11),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward, and
   wherein the remaining-number managing unit includes a slider-position detector that detects a position of the slider in the front-back direction.
(15) The tobacco fixture according to (11),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward, and
   wherein the remaining-number managing unit includes a distance sensor that is provided behind the slider and that detects a distance between the distance sensor and the slider or a distance between the distance sensor and one of the tobacco products at a tail end.
(16) The tobacco fixture according to any one of (11) to (15),
   wherein, when refilling one of the accommodating areas with a tobacco product,
   the display controller
   does not perform the display operation based on a removal request for removing a tobacco product regarding the accommodating area that is being refilled, and
   performs the display operation based on a removal request for removing a tobacco product regarding the other accommodating areas.
(17) The tobacco fixture according to any one of (1) to (16),
   wherein the plurality of accommodating areas are arranged in an array of a plurality of rows in each of a vertical direction and a horizontal direction,
   wherein the tobacco fixture includes
   an accommodation rack that holds the plurality of accommodating areas or includes the plurality of accommodating areas, and
   a plurality of the display bodies that are provided in correspondence with individual ones of the accommodating areas, and
   wherein each of the display bodies is pivotally supported by the accommodation rack so as to be swingable to a closed state in which the display body covers a front side of a corresponding one of the accommodating areas and to an open state in which removal of the tobacco product forward from the accommodating area is enabled.
(18) The tobacco fixture according to any one of (1) to (17), wherein the display body includes electronic paper.
(19) The tobacco fixture according to (18), comprising:
   a plurality of the display bodies that are provided in correspondence with individual ones of the accommodating areas,
   wherein, in normal time, the display controller causes the display bodies corresponding to the accommodating areas to perform a normal display that corresponds to the tobacco products accommodated in the accommodating areas, and
   wherein, when the brand-specifying-information acquiring unit acquires the brand specifying information, the display controller causes a specific notification display in a manner different from the normal display to be performed on one of the display bodies that corresponds to the accommodating area that corresponds to the brand specifying information.
(20) The tobacco fixture according to (19),
   wherein the display controller causes, when the brand-specifying-information acquiring unit acquires the brand specifying information, both of the normal display and the specific notification display to be performed in parallel on the display body corresponding to the accommodating area that corresponds to the brand specifying information.
(21) The tobacco fixture according to any one of (1) to (16),
   wherein the plurality of accommodating areas are arranged in an array of a plurality of rows in each of a vertical direction and a horizontal direction,
   wherein the tobacco fixture includes a plurality of the display bodies that are provided in correspondence with individual ones of the accommodating areas,
   wherein each of the plurality of display bodies includes a light-emitting member, and
   wherein the display bodies that are adjacent to each other in the horizontal direction are electrically and mechanically connected to each other to constitute an integrated display-body group.
(22) The tobacco fixture according to (21), wherein electric power is successively supplied from the display body located at one end of the display-body group to the display body that is adjacent.
(23) The tobacco fixture according to (21) or (22), comprising:
   an accommodation rack that holds the plurality of accommodating areas or includes the plurality of accommodating areas,
   wherein the display-body group is attachable to and detachable from the accommodation rack.
(24) The tobacco fixture according to any one of (21) to (23), wherein, among the display bodies that are included in the display-body group, the display bodies that are adjacent to each other in the horizontal direction are attachable to and detachable from each other.
(25) The tobacco fixture according to any one of (1) to (24), comprising:
   a new-accommodation-request receiving unit that receives a new accommodation request that is a request that a new tobacco product be accommodated in the accommodating area,
   wherein, when the new-accommodation-request receiving unit receives the new accommodation request, the display controller causes the display body to perform a candidate-area guide display that guides a candidate for the accommodating area for accommodating the new tobacco product.
(26) The tobacco fixture according to any one of (1) to (25),
   wherein the operator is a salesperson of a shop, and
   wherein the brand-specifying-information acquiring unit acquires the brand specifying information that is input by the salesperson.
(27) The tobacco fixture according to any one of (1) to (26), comprising:
   as the display body, a plurality of removal-side display bodies that are respectively disposed on a removal side toward which the tobacco products are removed from individual ones of the accommodating areas,
   wherein the display controller causes one of the removal-side display bodies that is disposed on the removal side of an accommodating area that corresponds to the brand specifying information acquired by the brand-specifying-information acquiring unit to perform display operation in such a manner as to enable identification of the accommodating area that corresponds to the brand specifying information.
(28) The tobacco fixture according to any one of (1) to (27), comprising:
   as the display body, a plurality of opposite-side display bodies that are disposed on a side opposite to a removal side toward which the tobacco products are removed from individual ones of the accommodating areas,
   wherein the display controller causes one of the opposite-side display bodies that corresponds to an accommodating area that corresponds to the brand specifying information acquired by the brand-specifying-information acquiring unit to perform display operation.
(29) The tobacco fixture according to any one of (1) to (28),
   wherein the tobacco fixture includes
   a plurality of magazines each of which constitutes the accommodating area,
   an accommodation rack having a shelf on which the magazines are mounted,
   a magazine-movement detector that detects that the magazine has moved from a reference position on the shelf to another position and that the magazine has returned to the reference position, and
   a historical-information storage unit that stores a history of detection by the magazine-movement detector.
(30) The tobacco fixture according to (29), further comprising a magazine-movement notifying unit that notifies that the magazine has moved from the reference position to another position.
(31) The tobacco fixture according to any one of (1) to (30),
   wherein the tobacco fixture includes a plurality of magazines each of which constitutes the accommodating area and an accommodation rack having a shelf on which the magazines are mounted,
   wherein the display body includes
   a light source that is disposed at a position behind the magazines in the accommodation rack, and
   a light guide member that is provided in the shelf and that guides light emitted from the light source toward a front end surface of the shelf, and
   wherein the display operation is performed at the front end surface of the shelf by using the light guided by the light guide member.
(32) The tobacco fixture according to any one of (1) to (31),
   wherein the display controller causes, as the display operation in such a manner as to enable identification of an accommodating area that corresponds to the brand specifying information,
   a first notification display that is a notification display of a general area and a second notification display that is a notification display of a more specific area to be performed.
(33) The tobacco fixture according to (32),
   wherein the tobacco fixture includes a plurality of accommodation racks,
   wherein each of the plurality of accommodation racks holds the plurality of accommodating areas or includes the plurality of accommodating areas,
   wherein the first notification display is a display that notifies a specific accommodation rack among the plurality of accommodation racks, and
   wherein the second notification display is a display that notifies a specific accommodating area among the plurality of accommodating areas of the accommodation rack that is notified by the first notification display.
(34) The tobacco fixture according to any one of (1) to (33),
   wherein the tobacco fixture includes a plurality of magazines each of which constitutes the accommodating area and an accommodation rack having a shelf on which the magazines are mounted,
   wherein, in the accommodation rack, the plurality of magazines are arranged in an array of a plurality of rows in each of a vertical direction and a horizontal direction,
   wherein, a plurality of the display bodies are provided so as to be capable of performing the display operation at positions corresponding to individual ones of the magazines at a front end surface of the shelf, and
   wherein the display controller causes display operation using a pair of the display bodies that sandwich the magazine corresponding to the brand specifying information from above and below to be performed as display operation in such a manner as to enable identification of an accommodating area that corresponds to the brand specifying information.
(35) The tobacco fixture according to any one of (1) to (34),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward,
   wherein the tobacco fixture includes a remaining-number detector that detects a number of the tobacco products on the mount portion or increase and decrease of the number,
   wherein the remaining-number detector includes a distance sensor that is provided behind the slider and that detects a distance between the distance sensor and the slider or a distance between the distance sensor and one of the tobacco products at a tail end, and
   wherein the remaining-number detector temporarily activates detection by the distance sensor when a removal request for removing the tobacco product from the magazine occurs, and subsequently deactivates the detection when a predetermined termination condition is satisfied.
(36) A display body that is detachably attached to a tobacco fixture that includes a plurality of accommodating areas that respectively accommodate a plurality of tobacco products so as to be removable by an operator and an accommodation rack that holds the plurality of accommodating areas or includes the plurality of accommodating areas, the plurality of accommodating areas being arranged in an array of a plurality of rows in each of a vertical direction and a horizontal direction,
   wherein the display body is in a form of a display-body group in which a plurality of display bodies that are adjacent to each other in the horizontal direction are electrically and mechanically connected to each other, and is attachable to and detachable from the accommodation rack in an arrangement corresponding to the accommodating areas.
(37) The display body according to (36), wherein, under control of the display controller, the display body performs display operation in such a manner as to enable identification of, among the plurality of accommodating area, an accommodating area that corresponds to the display body.
(38) A tobacco fixture comprising: a plurality of accommodating areas each of which accommodates a plurality of tobacco products so as to be removable by an operator; a display body that is provided in correspondence with the accommodating areas; and a display controller that controls display operation of the display body.
(39) The tobacco fixture according to (38), wherein the display controller causes each display body to perform a display that corresponds to a tobacco product that is accommodated in an accommodating area that corresponds to the display body.

The present application claims priority on Japanese Patent Application No. 2018-115582 filed on June 18, 2018, and Japanese Patent Application No. 2019-075597 filed on April 11, 2019, the entire contents of which are incorporated herein by reference.

### Reference Signs List

- 11: tobacco product
- 12: magazine accommodation rack (accommodation rack)
- 13: shelf
- 13a: positioning hole
- 14: back wall
- 15: magazine (accommodating area)
- 16: front wall (flap portion)
- 16a: pivot protrusion
- 16b: guided protrusion
- 16c: pressing protrusion
- 17: side wall
- 18: pivot hole
- 19: engagement hole
- 20: display body
- 22: controller
- 23: CPU
- 24: ROM
- 25: RAM
- 26: storage unit (historical-information storage unit)
- 27: brand-specifying-information acquiring unit
- 28: bar-code reader
- 29: distance sensor
- 31: mount portion
- 31a: body portion
- 32: side wall
- 33: bottom plate portion
- 33a: slit
- 33b: protruding piece
- 34: back wall
- 35: slider
- 35a: lower part
- 36: urging portion
- 37: normal display
- 38: removal notification display (specific notification display)
- 40: incorrect-removal notification display
- 43: remaining-number display
- 44: refilling notification display
- 44a: character information
- 44b: image information
- 47: candidate-area guide display
- 48: defective-product-information display
- 50: display panel
- 51: panel body
- 52: pivot
- 55: coupling panel
- 60: magazine fixture
- 66: electrode
- 67: electrode unit
- 68: wire
- 68a: leading end
- 69: electrode
- 70: swing member
- 70a: front part
- 70b: back part
- 71: pivot portion
- 72: switch
- 74: pivot hole
- 75: guide hole
- 76: switch
- 80: operation tablet
- 81: display screen
- 82: LED bar (display-body group)
- 84: LED (light-emitting member)
- 85, 85a, 85b, 85c: segment (display body)
- 86a: female connector
- 86b: male connector
- 86c: end connector
- 86e: fixing engagement portion
- 87: lock mechanism
- 88: key-insertion portion
- 89: engagement member
- 90, 90a, 90b: mobile terminal device
- 91, 91a, 91b: specific notification display
- 92: carton cabinet
- 93: detection sensor
- 94: lever
- 95: notifying unit
- 96: light source
- 97: light guide plate (light guide member)
- 98: partition plate
- 99: magnet
- 100: tobacco fixture
- 110: control box
- 111: display tape
- 112: top plate
- 113: display panel
- 114: second display unit

## Claims

1. A tobacco fixture comprising:
a plurality of accommodating areas each of which accommodates a plurality of tobacco products so as to be removable by an operator;
a brand-specifying-information acquiring unit that acquires brand specifying information that specifies a brand of the tobacco products;
a display body that is provided in correspondence with the accommodating areas; and
a display controller that controls display operation of the display body,
wherein the display controller performs control to cause the display body to perform display operation in such a manner as to enable identification of, among the plurality of accommodating areas, an accommodating area that corresponds to the brand specifying information acquired by the brand-specifying-information acquiring unit.

2. The tobacco fixture according to Claim 1, comprising:
a plurality of the display bodies that are provided in correspondence with individual ones of the accommodating areas,
wherein the display controller performs control to cause one of the display bodies that corresponds to, among the plurality of accommodating areas, an accommodating area that corresponds to the brand specifying information to perform display operation.

3. The tobacco fixture according to Claim 2, wherein the display controller performs control to cause the display body corresponding to the accommodating area that corresponds to the brand specifying information to be noticeable compared with the other display bodies.

4. The tobacco fixture according to any one of Claims 1 to 3,
wherein the brand-specifying-information acquiring unit acquires a removal request for removing a tobacco product and the brand specifying information corresponding to the removal request, and
wherein the display controller causes the display body to perform a removal notification display that prompts removal of the tobacco product from the accommodating area.

5. The tobacco fixture according to Claim 4, wherein the display controller causes the display body to display number-specifying information indicating a number of tobacco products that correspond to the removal request and that are to be removed from the accommodating area.

6. The tobacco fixture according to Claim 4 or 5, wherein the display controller causes the display body to display sales-terminal specifying information indicating which sales terminal, among a plurality of sales terminals that are set in a shop, is to be used to sell a tobacco product corresponding to the removal request.

7. The tobacco fixture according to any one of Claims 4 to 6, comprising:
an incorrect-removal detector that detects incorrect removal that is removal of the tobacco product from the accommodating area that differs from the removal request,
wherein, when the incorrect removal occurs, the display controller causes the display body to perform an incorrect-removal notification display indicating that the removal is incorrect.

8. The tobacco fixture according to Claim 7,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward, whe
rein the mount portion includes
a body portion on which the plurality of tobacco products are mounted, and
a flap portion that is provided so as to be swingable with respect to a front end portion of the body portion and that constitutes a front wall of the mount portion,
wherein the flap portion inclines forward relative to the body portion when one of the tobacco products that is mounted at a forefront position of the mount portion is removed from the mount portion, and
wherein the incorrect-removal detector includes a forward-inclination detector that detects a forward inclining motion of the flap portion.

9. The tobacco fixture according to Claim 7,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward, and
wherein the incorrect-removal detector includes a slider-position detector that detects a position of the slider in the front-back direction.

10. The tobacco fixture according to Claim 7,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward, and
wherein the incorrect-removal detector includes a distance sensor that is provided behind the slider and that detects a distance between the distance sensor and the slider or a distance between the distance sensor and one of the tobacco products at a tail end.

11. The tobacco fixture according to any one of Claims 1 to 10, further comprising:
a remaining-number managing unit that manages a remaining number of the tobacco products in each of the plurality of accommodating areas,
wherein the display controller causes the display body to perform a refilling notification display that prompts refilling of the accommodating area with the tobacco products in accordance with a result of management by the remaining-number managing unit.

12. The tobacco fixture according to Claim 11,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion,
an urging portion that urges the slider forward, and
a swing member that swings in accordance with a position of the slider in the front-back direction, and
wherein the remaining-number managing unit includes a swing detector that detects a swing of the swing member.

13. The tobacco fixture according to Claim 11,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward,
wherein the mount portion includes
a body portion on which the plurality of tobacco products are mounted, and
a flap portion that is provided so as to be swingable with respect to a front end portion of the body portion and that constitutes a front wall of the mount portion,
wherein the flap portion inclines forward relative to the body portion when one of the tobacco products that is mounted at a forefront position of the mount portion is removed from the mount portion, and
wherein the remaining-number managing unit includes a forward-inclination detector that detects a forward inclining motion of the flap portion.

14. The tobacco fixture according to Claim 11,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward, and
wherein the remaining-number managing unit includes a slider-position detector that detects a position of the slider in the front-back direction.

15. The tobacco fixture according to Claim 11,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward, and
wherein the remaining-number managing unit includes a distance sensor that is provided behind the slider and that detects a distance between the distance sensor and the slider or a distance between the distance sensor and one of the tobacco products at a tail end.

16. The tobacco fixture according to any one of Claims 11 to 15,
wherein, when refilling one of the accommodating areas with a tobacco product,
the display controller
does not perform the display operation based on a removal request for removing a tobacco product regarding the accommodating area that is being refilled, and
performs the display operation based on a removal request for removing a tobacco product regarding the other accommodating areas.

17. The tobacco fixture according to any one of Claims 1 to 16,
wherein the plurality of accommodating areas are arranged in an array of a plurality of rows in each of a vertical direction and a horizontal direction,
wherein the tobacco fixture includes
an accommodation rack that holds the plurality of accommodating areas or includes the plurality of accommodating areas, and
a plurality of the display bodies that are provided in correspondence with individual ones of the accommodating areas, and
wherein each of the display bodies is pivotally supported by the accommodation rack so as to be swingable to a closed state in which the display body covers a front side of a corresponding one of the accommodating areas and to an open state in which removal of the tobacco product forward from the accommodating area is enabled.

18. The tobacco fixture according to any one of Claims 1 to 17, wherein the display body includes electronic paper.

19. The tobacco fixture according to Claim 18, comprising:
a plurality of the display bodies that are provided in correspondence with individual ones of the accommodating areas,
wherein, in normal time, the display controller causes the display bodies corresponding to the accommodating areas to perform a normal display that corresponds to the tobacco products accommodated in the accommodating areas, and
wherein, when the brand-specifying-information acquiring unit acquires the brand specifying information, the display controller causes a specific notification display in a manner different from the normal display to be performed on one of the display bodies that corresponds to the accommodating area that corresponds to the brand specifying information.

20. The tobacco fixture according to Claim 19,
wherein the display controller
causes, when the brand-specifying-information acquiring unit acquires the brand specifying information, both of the normal display and the specific notification display to be performed in parallel on the display body corresponding to the accommodating area that corresponds to the brand specifying information.

21. The tobacco fixture according to any one of Claims 1 to 16,
wherein the plurality of accommodating areas are arranged in an array of a plurality of rows in each of a vertical direction and a horizontal direction,
wherein the tobacco fixture includes a plurality of the display bodies that are provided in correspondence with individual ones of the accommodating areas,
wherein each of the plurality of display bodies includes a light-emitting member, and
wherein the display bodies that are adjacent to each other in the horizontal direction are electrically and mechanically connected to each other to constitute an integrated display-body group.

22. The tobacco fixture according to Claim 21, wherein electric power is successively supplied from the display body located at one end of the display-body group to the display body that is adjacent.

23. The tobacco fixture according to Claim 21 or 22, comprising:
an accommodation rack that holds the plurality of accommodating areas or includes the plurality of accommodating areas,
wherein the display-body group is attachable to and detachable from the accommodation rack.

24. The tobacco fixture according to any one of Claims 21 to 23, wherein, among the display bodies that are included in the display-body group, the display bodies that are adjacent to each other in the horizontal direction are attachable to and detachable from each other.

25. The tobacco fixture according to any one of Claims 1 to 24, comprising:
a new-accommodation-request receiving unit that receives a new accommodation request that is a request that a new tobacco product be accommodated in the accommodating area,
wherein, when the new-accommodation-request receiving unit receives the new accommodation request, the display controller causes the display body to perform a candidate-area guide display that guides a candidate for the accommodating area for accommodating the new tobacco product.

26. The tobacco fixture according to any one of Claims 1 to 25,
wherein the operator is a salesperson of a shop, and
wherein the brand-specifying-information acquiring unit acquires the brand specifying information that is input by the salesperson.

27. The tobacco fixture according to any one of Claims 1 to 26, comprising:
as the display body, a plurality of removal-side display bodies that are respectively disposed on a removal side toward which the tobacco products are removed from individual ones of the accommodating areas,
wherein the display controller causes one of the removal-side display bodies that is disposed on the removal side of an accommodating area that corresponds to the brand specifying information acquired by the brand-specifying-information acquiring unit to perform display operation in such a manner as to enable identification of the accommodating area that corresponds to the brand specifying information.

28. The tobacco fixture according to any one of Claims 1 to 27, comprising:
as the display body, a plurality of opposite-side display bodies that are disposed on a side opposite to a removal side toward which the tobacco products are removed from individual ones of the accommodating areas,
wherein the display controller causes one of the opposite-side display bodies that corresponds to an accommodating area that corresponds to the brand specifying information acquired by the brand-specifying-information acquiring unit to perform display operation.

29. The tobacco fixture according to any one of Claims 1 to 28,
wherein the tobacco fixture includes
a plurality of magazines each of which constitutes the accommodating area,
an accommodation rack having a shelf on which the magazines are mounted,
a magazine-movement detector that detects that the magazine has moved from a reference position on the shelf to another position and that the magazine has returned to the reference position, and
a historical-information storage unit that stores a history of detection by the magazine-movement detector.

30. The tobacco fixture according to Claim 29, further comprising a magazine-movement notifying unit that notifies that the magazine has moved from the reference position to another position.

31. The tobacco fixture according to any one of Claims 1 to 30,
wherein the tobacco fixture includes a plurality of magazines each of which constitutes the accommodating area, and an accommodation rack having a shelf on which the magazines are mounted,
wherein the display body includes
a light source that is disposed at a position behind the magazines in the accommodation rack, and
a light guide member that is provided in the shelf and that guides light emitted from the light source toward a front end surface of the shelf, and
wherein the display operation is performed at the front end surface of the shelf by using the light guided by the light guide member.

32. The tobacco fixture according to any one of Claims 1 to 31,
wherein the display controller causes, as the display operation in such a manner as to enable identification of an accommodating area that corresponds to the brand specifying information,
a first notification display that is a notification display of a general area and a second notification display that is a notification display of a more specific area to be performed.

33. The tobacco fixture according to Claim 32,
wherein the tobacco fixture includes a plurality of accommodation racks,
wherein each of the plurality of accommodation racks holds the plurality of accommodating areas or includes the plurality of accommodating areas,
wherein the first notification display is a display that notifies a specific accommodation rack among the plurality of accommodation racks, and
wherein the second notification display is a display that notifies a specific accommodating area among the plurality of accommodating areas of the accommodation rack that is notified by the first notification display.

34. The tobacco fixture according to any one of Claims 1 to 33,
wherein the tobacco fixture includes a plurality of magazines each of which constitutes the accommodating area and an accommodation rack having a shelf on which the magazines are mounted,
wherein, in the accommodation rack, the plurality of magazines are arranged in an array of a plurality of rows in each of a vertical direction and a horizontal direction,
wherein, a plurality of the display bodies are provided so as to be capable of performing the display operation at positions corresponding to individual ones of the magazines at a front end surface of the shelf, and
wherein the display controller causes display operation using a pair of the display bodies that sandwich the magazine corresponding to the brand specifying information from above and below to be performed as display operation in such a manner as to enable identification of an accommodating area that corresponds to the brand specifying information.

35. The tobacco fixture according to any one of Claims 1 to 34,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward,
wherein the tobacco fixture includes a remaining-number detector that detects a number of the tobacco products on the mount portion or increase and decrease of the number,
wherein the remaining-number detector includes a distance sensor that is provided behind the slider and that detects a distance between the distance sensor and the slider or a distance between the distance sensor and one of the tobacco products at a tail end, and
wherein the remaining-number detector temporarily activates detection by the distance sensor when a removal request for removing the tobacco product from the magazine occurs, and subsequently deactivates the detection when a predetermined termination condition is satisfied.

36. A display body that is detachably attached to a tobacco fixture that includes a plurality of accommodating areas that respectively accommodate a plurality of tobacco products so as to be removable by an operator and an accommodation rack that holds the plurality of accommodating areas or includes the plurality of accommodating areas, the plurality of accommodating areas being arranged in an array of a plurality of rows in each of a vertical direction and a horizontal direction,
wherein the display body is in a form of a display-body group in which a plurality of display bodies that are adjacent to each other in the horizontal direction are electrically and mechanically connected to each other, and is attachable to and detachable from the accommodation rack in an arrangement corresponding to the accommodating areas.
